# EUROPEAN PATENT SPECIFICATION

(11) **EP 3 092 560 B1**
(45) Date of publication and mention of the grant of the patent: **08.05.2019**
(21) Application number: 14833444.4
(22) Date of filing: 31.12.2014
(51) Int. Cl.: G06F 9/48, G06F 9/451, G06F 9/50

(54) **VEHICLE WITH MULTIPLE USER INTERFACE OPERATING DOMAINS**
FAHRZEUG MIT OPERATIONSDOMÄNEN FÜR MEHRERE BENUTZERSCHNITTSTELLEN
VÉHICULE DOTÉ DE MULTIPLES DOMAINES D'EXPLOITATION D'INTERFACE UTILISATEUR

(30) Priority: 06.01.2014 US 201461924226 P
(43) Date of publication of application: 16.11.2016
(73) Proprietor: Johnson Controls Technology Company, Milwaukee, WI 53209 (US)
(72) Inventor: AHMED, Waheed, 76744 Woerth (DE); WIETZKE, Joachim, 76227 Karlsruhe (DE); PABST, Markus, 76137 Karlsruhe (DE)
(74) Representative: Schwöbel, Thilo K.
(86) International application number: PCT/US2014/072961
(87) International publication number: WO 2015/103374

(56) References cited:
- WO-A1-2013/100902
- DE-A1-102012 209 789
- KR-A- 20120 067 502
- US-A1- 2013 241 720

## Description

### BACKGROUND

The present invention relates generally to the field of computerized user interfaces for vehicle installation. Vehicle user interface displays (e.g., a dial, a radio display, etc.) are conventionally fixed to a particular location in the vehicle. They are also conventionally controlled by entirely different circuits or systems. For example, the radio system and its user interface is conventionally controlled by a first system and the speedometer dial is conventionally controlled by a completely different system.
US 2013/241720 A1 discloses a method of configuring a vehicle control system graphical user interface ("GUI") to display a plurality of vehicle applications. DE 10 2012 209 789 A1 discloses an electrical control device with a main core unit to execute an important process with high priority. Several sub core units execute normal process with low priority. WO 2013/100902 A1 discloses a system for providing to-do-list based navigation.

It is challenging and difficult to develop vehicle user interface systems having high reliability, configurability, and usability.

### SUMMARY

One implementation of the present disclosure is a vehicle interface system according to claim 1. The vehicle interface system includes a graphics processing unit and a plurality of processing domains configured to execute vehicle applications and generate tasks for the graphics processing unit. The system further includes a rendering core including a task scheduler configured to receive the tasks generated by the processing domains and to determine an order in which to send the tasks to the graphics processing unit. The graphics processing unit processes the tasks in the order determined by the task scheduler and generates display data based on the tasks. The system further includes an electronic display configured to receive the display data generated by the graphics processing unit and to present the display data to a user.

In the following, the term "embodiment" is to be understood as "example" unless it refers to a combination of features defined in the claims. In some embodiments, the task scheduler identifies a priority level associated with each of the tasks and determines the order in which to send the tasks to the graphics processing unit based on the identified priority levels. Identifying a priority level associated with a task may include identifying which of the plurality of processing domains generated the task, identifying a priority level associated with the identified processing domain, and assigning a priority level to the task according to the priority level associated with the identified processing domain.

In some embodiments, the plurality of processing domains include a high reliability domain configured to execute vehicle critical applications and generate high priority tasks for the graphics processing unit. The plurality of processing domains may further include a lower reliability domain configured to execute lower priority vehicle applications and generate low priority tasks for the graphics processing unit.

In some embodiments, the rendering core includes a first application program interface configured to receive and manage a first set of tasks generated by a first set of the processing domains and to provide the first set of tasks to the scheduler. In some embodiments, the vehicle interface system includes a second application program interface configured to receive and manage a second set of tasks generated by a second set of the processing domains. The second set of processing domains may include one or more of the processing domains not in the first set of processing domains.

In some embodiments, the task scheduler is configured to identify a priority level associated with each of the tasks received at the application program interface. The task scheduler may receive an interrupt from the graphics processing unit requesting a task for processing and send a task with a highest identified priority level to the graphics processing unit in response to receiving the interrupt.

In some embodiments, the rendering core includes a plurality of remote procedure call endpoints. Each of the remote procedure call endpoints may be designated for one of the plurality of processing domains and may be configured to manage the tasks generated by the designated processing domain.

In some embodiments, the graphics processing unit is configured to identify pieces of each task to be displayed and to store the identified pieces in a framebuffer. In some embodiments, the rendering core comprises a plurality of framebuffers. Each of the framebuffers may be designated for one of the plurality of processing domains and configured to store pieces of each task identified by the graphics processing unit as pieces of the task to be displayed.

In some embodiments, the rendering core includes a compositor configured to receive the identified pieces of the tasks from the plurality of framebuffers and to generate a display task by assembling the identified pieces. The graphics processing unit may receive the assembled task from the task scheduler and generates the display data based on the assembled task.

In some embodiments of the present invention, the vehicle interface system includes a graphics processing unit and a multi-core processor. The multi-core processor includes a first processing core configured to execute high priority vehicle applications and generate high priority tasks for the graphics processing unit and a second processing core configured to execute low priority vehicle applications and generate low priority tasks for the graphics processing unit. The system further includes a graphics processing unit driver configured to receive and manage tasks generated by each of the processing cores. The system further includes a task scheduler configured to identify a priority level associated with each of the tasks received at the graphics processing unit driver and to determine an order in which to send the tasks to the graphics processing unit based on the identified priority levels. The graphics processing unit processes the tasks in the order determined by the task scheduler and generates display data based on the tasks. The system further includes an electronic display configured to receive the display data generated by the graphics processing unit and to present the display data to a user.

As used herein, the terms "first processing core" "second processing core" are intended to distinguish one core of the multi-core processor from another core of the multi-core processor. The descriptors "first" and "second" do not require that the "first processing core" be the first logical core of the processor or that the "second processing core" be the second logical core of the processor. Rather, the "first processing core" can be any core of the processor and the "second processing core" can be any core that is not the first core. Unless otherwise specified, the descriptors "first" and "second" are used throughout this disclosure merely to distinguish various items from each other (e.g., processor cores, domains, operating systems, etc.) and do not necessarily imply any particular order or sequence.

In some embodiments, the task scheduler is configured to receive an interrupt from the graphics processing unit requesting a task for processing. The task scheduler may determine which of the tasks received at the graphics processing unit driver has a highest identified priority level and send a task with the highest identified priority level to the graphics processing unit in response to receiving the interrupt. In some embodiments, identifying a priority level associated with a task includes identifying which of the plurality of processing cores generated the task, identifying a priority level associated with the identified processing core, and assigning a priority level to the task according to the priority level associated with the identified processing core.

In some embodiments, the high priority tasks are generated by vehicle applications that relate to at least one of a safety of the vehicle and critical vehicle operations. The low priority tasks may be generated by at least one of vehicle infotainment applications, cloud applications, and autonomous driver assistance system applications.

Another implementation of the present disclosure is a method for generating a user interface in a vehicle interface system according to claim 13. The method includes executing, by a first core of a multi-core processor, high priority vehicle applications in a first processing domain. The high priority vehicle applications generate high priority tasks. The method further includes executing, by a second core of the multi-core processor, low priority vehicle applications in a second processing domain. The low priority vehicle applications generate low priority tasks. The method further includes identifying, by a task scheduler, a priority level associated with each of the generated tasks and determining, by the task scheduler, an order in which to send the tasks to a graphics processing unit based on the identified priority levels. The method further includes processing, by the graphics processing unit, the tasks in the order determined by the task scheduler. The graphics processing unit generates display data based on the tasks. The method further includes presenting the display data generated by the graphics processing unit via an electronic display of the vehicle interface system.

In some embodiments, identifying a priority level associated with a task includes identifying which of the plurality of processing domains generated the task, identifying a priority level associated with the identified processing domain, and assigning a priority level to the task according to the priority level associated with the identified processing domain.

In some embodiments, determining the order in which to send the tasks to the graphics processing unit includes receiving an interrupt from the graphics processing unit requesting a task for processing, determining which of the generated tasks has a highest identified priority level, and sending a task with the highest identified priority level to the graphics processing unit in response to receiving the interrupt.

Those skilled in the art will appreciate that the summary is illustrative only and is not intended to be in any way limiting. Other aspects, inventive features, and advantages of the devices and/or processes described herein, as defined solely by the claims, will become apparent in the detailed description set forth herein and taken in conjunction with the accompanying drawings.

### BRIEF DESCRIPTION OF THE DRAWINGS

FIG. 1 is an illustration of a vehicle (e.g., an automobile) for which the systems and methods of the present disclosure can be implemented, according to an exemplary embodiment.
FIG. 2 is an illustration of a vehicle user interface system that may be provided for the vehicle of FIG. 1 using the systems and methods described herein, according to an exemplary embodiment.
Fig. 3A is an illustration of a vehicle instrument cluster display that may be provided via the vehicle user interface system of FIG. 2 according to the systems and methods of the present disclosure, according to an exemplary embodiment.
FIG. 3B is a block diagram of a vehicle interface system including a multi-core processing environment configured to provide displays via a vehicle user interface such as the vehicle user interface system of FIG. 2 and/or the vehicle instrument cluster display of FIG. 3A, according to an exemplary embodiment.
FIG. 4 is a block diagram illustrating the multi-core processing environment of FIG. 3B in greater detail in which the multi-core processing environment is shown to include a hypervisor and multiple separate domains, according to an exemplary embodiment.
FIG. 5 is a block diagram illustrating a memory mapping process conducted by the hypervisor of FIG. 4 at startup, according to an exemplary embodiment.
FIG. 6 is a block diagram illustrating various features of the hypervisor of FIG. 4, according to an exemplary embodiment.
FIG. 7 is a block diagram illustrating various components of the multi-core processing environment of FIG. 3B that can be used to facilitate display output on a common display system, according to an exemplary embodiment.
FIG. 8 is a block diagram illustrating various operational modules that may operate within the multi-core processing environment of FIG. 4 to generate application images (e.g., graphic output) for display on a vehicle interface system, according to an exemplary embodiment.
FIG. 9A is a flow diagram illustrating a system and method for GPU processing and sharing that may be implemented in the vehicle of FIG. 1, according to an exemplary embodiment.
FIG. 9B is a block diagram illustrating the system of FIG. 9A in greater detail, according to an exemplary embodiment.
FIG. 10 is an illustration of a GPU scheduling process that may be performed by a conventional graphics processing system for rendering graphics on a vehicle display, according to an exemplary embodiment.
FIG. 11 is an illustration of a tile-based GPU scheduling process that may be performed by the system of FIG. 9A, according to an exemplary embodiment.
FIGS. 12-13 are illustrations of an event-driven GPU scheduling process that may be performed by the system of FIG. 9A, according to an exemplary embodiment; and
FIG. 14 is a block diagram of a graphics safety and security system that may be used in conjunction with the system of FIG. 9A, according to an exemplary embodiment.

### DETAILED DESCRIPTION

Referring generally to the FIGURES, systems and methods for presenting user interfaces in a vehicle are shown, according to various exemplary embodiments. The systems and methods described herein may be used to present multiple user interfaces in a vehicle and to support diverse application requirements in an integrated system. Various vehicle applications may require different degrees of security, safety, and openness (e.g., the ability to receive new applications from the Internet). The systems and methods of the present disclosure provide multiple different operating systems (e.g., a high reliability operating system, a cloud application operating system, an entertainment operating system, etc.) that operate substantially independently so as to prevent the operations of one operating system from interfering with the operations of the other operating systems.

The vehicle system described herein advantageously encapsulates different domains on a single platform. This encapsulation supports high degrees of security, safety, and openness to support different applications, yet allows a high degree of user customization and user interaction. The vehicle system includes a virtualization component configured to integrate the operations of multiple different domains on a single platform while retaining a degree of separation between the domains to ensure security and safety. In an exemplary embodiment, a multi-core system on a chip (SoC) is used to implement the vehicle system.

In an exemplary embodiment, the system includes and supports at least the following four domains: (1) a high reliability driver information cluster domain, (2) a cloud domain, (3) an entertainment domain, and (4) an autonomous driver assistance systems (ADAS) domain. The high reliability driver information cluster domain may support critical vehicle applications that relate to the safety of the vehicle and/or critical vehicle operations. The cloud domain may support downloads of new user or vehicle "apps" from the Internet, a connected portable electronic device, or another source. The entertainment domain may provide a high quality user experience for applications and user interface components including, e.g., a music player, navigation, phone and/or connectivity applications. The ADAS domain may provide support for autonomous driver assistance systems. In various embodiments, any number and/or type of domains may be supported (e.g., two domains, three domains, five domains, eight domains, etc.) in addition to or in place of the four domains enumerated herein.

In an exemplary embodiment, at least four different operating system environments are provided (e.g., one for each of the domains). A first operating system environment for the high reliability domain may reliably drive a display having cluster information. A second operating system environment for the cloud domain may support the new user or vehicle apps. A third operating system environment for the entertainment domain may support various entertainment applications and user interface components. A fourth operating system environment for the ADAS domain may support provide an environment for running ADAS applications. In some embodiments, a fifth operating environment may control the graphical human machine interface (HMI) as well as handle user inputs. Each of the operating system environments may be dedicated to different cores (or multiple cores) of a multi-core system-on-a-chip (SoC). In various embodiments, any number and/or type of operating environments may be provided in addition to or in place of the operating environments described herein.

In an exemplary embodiment, memory for each dedicated operating system is separated. Each of the major operating systems may be bound to one (or more) cores of the processor, which may be configured to perform asymmetric multi-processing (AMP). Advantageously, binding each operating system to a particular core (or cores) of the processor provides a number of hardware enforced security controls. For example, each core assigned to a guest may be able to access only a predefined area of physical memory and/or a predefined subset of peripheral devices. Vehicle devices (e.g., DMA devices) may be subject to memory protection via hardware of the SoC. This strong binding results in an environment in which a first guest operating system (OS) can run on a specific core (or cores) of a multi-core processor such that the first guest OS cannot interfere with the operations of other guest OSs running on different cores. The guest OS may be configured to run without referencing a hypervisor layer, but rather may run directly on the underlying silicon. This provides full hardware virtualization where each guest OS does not need to be changed or modified.

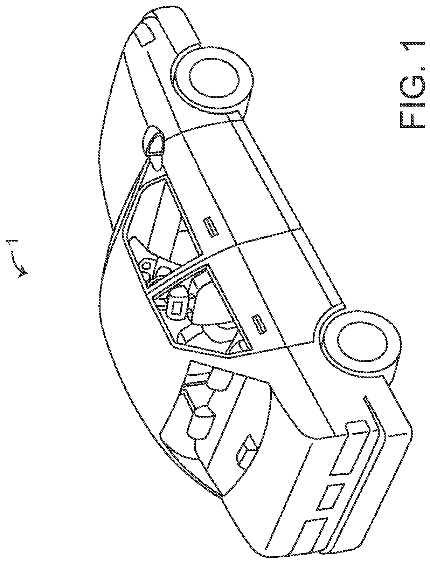

Referring now to FIG. 1, an automobile 1 is shown, according to an exemplary embodiment. The features of the embodiments described herein may be implemented for a vehicle such as automobile 1 or for any other type of vehicle. The embodiments described herein advantageously provide improved display and control functionality for a driver or passenger of automobile 1. The embodiments described herein may provide improved control to a driver or passenger of automobile 1 over various electronic and mechanical systems of automobile 1.

Vehicles such as automobile 1 may include user interface systems. Such user interface systems can provide the user with safety related information (e.g., seatbelt information, speed information, tire pressure information, engine warning information, fuel level information, etc.) as well as infotainment related information (e.g., music player information, radio information, navigation information, phone information, etc.). Conventionally such systems are relatively separated such that one vehicle sub-system provides its own displays with the safety related information and another vehicle sub-system provides its own display or displays with infotainment related information.

According to various embodiments described herein, driver information (e.g., according to varying automotive safety integrity levels ASIL) is brought together with infotainment applications and/or third party (e.g., 'app' or 'cloud') applications. The information is processed by a multi-core processing environment and graphically integrated into a display environment. Despite this integration, at least the high reliability (i.e., safety implicated) processing is segregated by hardware and software from the processing and information without safety implications.

According to an exemplary embodiment, automobile 1 includes a computer system for integration with a vehicle user interface (e.g., display or displays and user input devices) and includes a processing system. The processing system may include a multi-core processor. The processing system may be configured to provide virtualization for a first guest operating system in a first core or cores of the multi-core processor. The processing system may also be configured to provide virtualization for a second guest operating system in a second and different core or cores of the multi-core processor (i.e., any core not allocated to the first guest operating system). The first guest operating system may be configured for high reliability operation. The virtualization prevents operations of the second guest operating system from disrupting the high reliability operation of the first guest operating system.

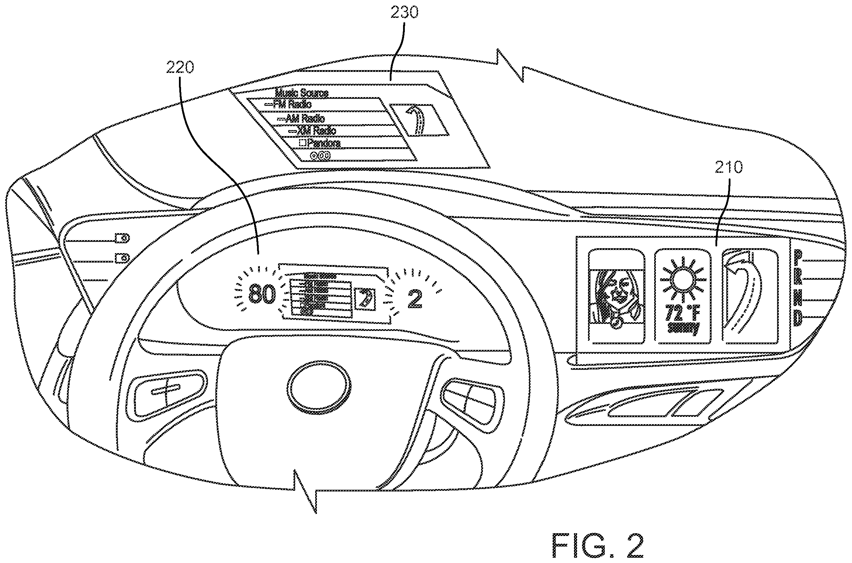

Referring now to FIG. 2, a user interface system for a vehicle is shown, according to an exemplary embodiment. The user interface system is shown to include an instrument cluster display (ICD) 220, a head up display (HUD) 230, and a center information display (CID) 210. In an exemplary embodiment, each of displays 210, 220, and 230 is a single electronic display. In some embodiments, displays 210, 220, and 230 are three separate displays driver from multiple domains. Display content from various vehicle subsystems may be displayed on each of displays 210, 220, and 230 simultaneously. For example, instrument cluster display 220 is shown displaying engine control unit (ECU) information (e.g., speed, gear, RPMs, etc.). Display 220 is also shown displaying music player information from a music application and navigation information from a navigation application. The navigation information and music player information are shown as also being output to display 230. Phone information from a phone application may be presented via display 210 in parallel with weather information (e.g., from an internet source) and navigation information (from the same navigation application providing information to displays 220, 230).

As shown in FIG. 2, ICD 220, CID 210, and/or HUD 230 may have different and/or multiple display areas for displaying application information. These display areas may be implemented as virtual operating fields that are configurable by a multi-core processing environment and/or associated hardware and software. For example, CID 210 is illustrated having three display areas (e.g., virtual operating fields). Application data information for a mobile phone application, weather application, and navigation application may be displayed in the three display areas respectively.

The multi-core processing environment may reconfigure the display areas in response to system events, user input, program instructions, etc. For example, if a user exits the weather application, the phone application and navigation application may be resized to fill CID 210. Many configurations of display areas are possible taking into account factors such as the number of applications to be displayed, the size of applications to be displayed, application information to be displayed, whether an application is a high reliability application, etc. Different configurations may have different characteristics such as applications displayed as portraits, applications displayed as landscapes, multiple columns of applications, multiple rows of applications, applications with different sized display areas, etc.

In an exemplary embodiment, the processing system providing ICD 220, CID 210, and HUD 230 includes a multi-core processor. The processing system may be configured to provide virtualization for a first guest operating system in a first core or cores of the multi-core processor. The processing system may also be configured to provide virtualization for a second guest operating system in a second and different core or cores of the multi-core processor (i.e., one or more cores not assigned to the first guest operating system). The first guest operating system may be configured for high reliability operation (e.g., receiving safety-related information from and ECU and generating graphics information using the received information). The virtualization prevents operations of the second guest operating system (e.g., that may run 'apps' from third party developers or from a cloud) from disrupting the high reliability operation of the first guest operating system.

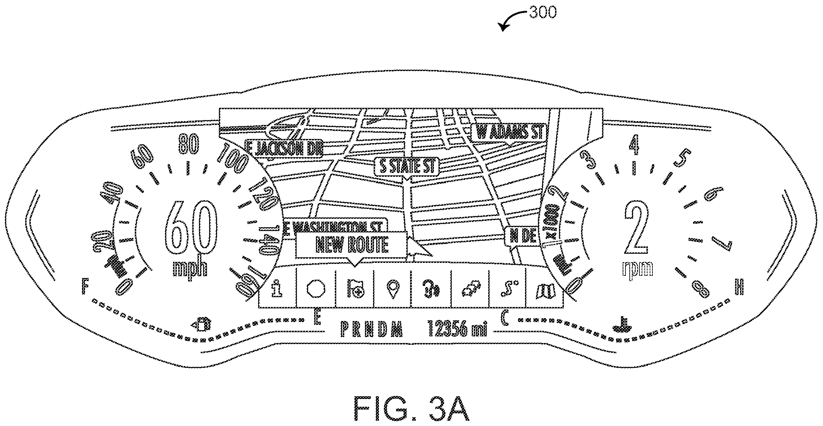

Referring now to FIG. 3A, an instrument cluster display (ICD) 300 is shown, according to an exemplary embodiment. ICD 300 shows a high degree of integration possible when a display screen is shared. In ICD 300, the information from the ECU is partially overlaid on top of the screen area for the navigation information. The screen area for the navigation information can be changed to display information associated with the media player, phone, or other information. Multiple configurations are possible as explained above. In some embodiments, ICD 300 or another display may have dedicated areas to display high reliability information that may not be reconfigured. For example, the ECU information displayed on ICD 300 may be fixed, but the remaining display area may be configured by a multi-core processing environment. For example, a navigation application and weather application may be displayed in the display area or areas of ICD 300 not dedicated to high reliability information.

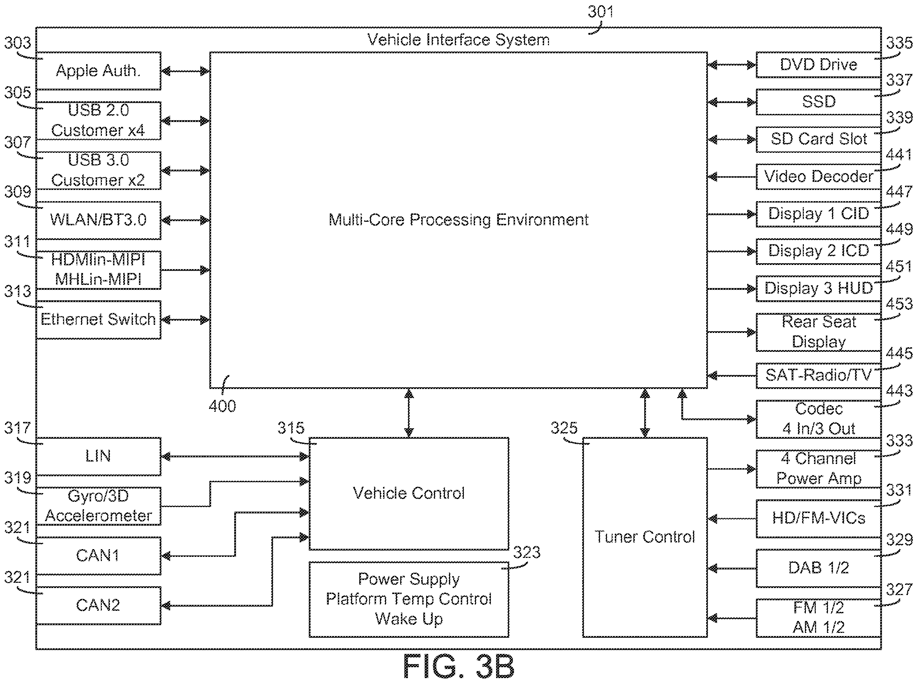

In some embodiments, a vehicle interface system manages the connections between display devices for the ICD, CID, HUD, and other displays (e.g., rear seat passenger displays, passenger dashboard displays, etc.). The vehicle interface system may include connections between output devices such as displays, input devices, and the hardware related to the multi-core processing environment. Such a vehicle interface system is described in greater detail with reference to FIG. 3B.

Referring now to FIG. 3B, a vehicle interface system 301 is shown, according to an exemplary embodiment. Vehicle interface system 301 includes connections between a multi-core processing environment 400 and input/output devices, connections, and/or elements. Multi-core processing environment 400 may provide the system architecture for an in-vehicle audio-visual system, as previously described. Multi-core processing environment 400 may include a variety of computing hardware components (e.g., processors, integrated circuits, printed circuit boards, random access memory, hard disk storage, solid state memory storage, communication devices, etc.). In some embodiments, multi-core processing environment 400 manages various inputs and outputs exchanged between applications running within multi-core processing environment 400 and/or various peripheral devices (e.g., devices 303-445) according to the system architecture. Multi-core processing environment 400 may perform calculations, run applications, manage vehicle interface system 301, preform general processing tasks, run operating systems, etc.

Multi-core processing environment 400 may be connected to connector hardware which allows multi-core processing environment 400 to receive information from other devices or sources and/or send information to other devices or sources. For example, multi-core processing environment 400 may send data to or receive data from portable media devices, data storage devices, servers, mobile phones, etc. which are connected to multi-core processing environment 400 through connector hardware. In some embodiments, multi-core processing environment 400 is connected to an apple authorized connector 303. Apple authorized connector 303 may be any connector for connection to an APPLE® product. For example, apple authorized connector 303 may be a firewire connector, 30-pin APPLE® device compatible connector, lightning connector, etc.

In some examples, multi-core processing environment 400 is connected to a Universal Serial Bus version 2.0 ("USB 2.0") connector 305. USB 2.0 connector 305 may allow for connection of one or more device or data sources. For example, USB 2.0 connector 305 may include four female connectors. In other examples, USB 2.0 connector 305 includes one or more male connectors. In some examples, multi-core processing environment 400 is connected with a Universal Serial Bus version 3.0 ("USB 3.0") connector 307. As described with reference to USB 2.0 connector 305, USB 3.0 connector 307 may include one or more male or female connections to allow compatible devices to connect.

In some embodiments, multi-core processing environment 400 is connected to one or more wireless communications connections 309. Wireless communications connection 309 may be implemented with additional wireless communications devices (e.g., processors, antennas, etc.). Wireless communications connection 309 allows for data transfer between multi-core processing environment 400 and other devices or sources. For example, wireless communications connection 309 may allow for data transfer using infrared communication, Bluetooth communication such as Bluetooth 3.0, ZigBee communication, Wi-Fi communication, communication over a local area network and/or wireless local area network, etc.

In some embodiments, multi-core processing environment 400 is connected to one or more video connectors 311. Video connector 311 allows for the transmission of video data between devices/sources and multi-core processing environment 400 is connected. For example, video connector 311 may be a connector or connection following a standard such as High-Definition Multimedia Interface (HDMI), Mobile High-definition Link (MHL), etc. In some embodiments, video connector 311 includes hardware components which facilitate data transfer and/or comply with a standard. For example, video connector 311 may implement a standard using auxiliary processors, integrated circuits, memory, a mobile Industry Processor Interface, etc.

In some embodiments, multi-core processing environment 400 is connected to one or more wired networking connections 313. Wired networking connections 313 may include connection hardware and/or networking devices. For example, wired networking connection 313 may be an Ethernet switch, router, hub, network bridge, etc.

Multi-core processing environment 400 may be connected to a vehicle control 315. In some embodiments, vehicle control 315 allows multi-core processing environment 400 to connect to vehicle control equipment such as processors, memory, sensors, etc. used by the vehicle. For example, vehicle control 315 may connect multi-core processing environment 400 to an engine control unit, airbag module, body controller, cruise control module, transmission controller, etc. In other embodiments, multi-core processing environment 400 is connected directly to computer systems, such as the ones listed. In such a case, vehicle control 315 is the vehicle control system including elements such as an engine control unit, onboard processors, onboard memory, etc. Vehicle control 315 may route information form additional sources connected to vehicle control 315. Information may be routed from additional sources to multi-core processing environment 400 and/or from multi-core processing environment 400 to additional sources.

In some embodiments, vehicle control 315 is connected to one or more Local Interconnect Networks (LIN) 317, vehicle sensors 319, and/or Controller Area Networks (CAN) 321. LIN 317 may follow the LIN protocol and allow communication between vehicle components. Vehicle sensors 319 may include sensors for determining vehicle telemetry. For example, vehicle sensors 319 may be one or more of gyroscopes, accelerometers, three dimensional accelerometers, inclinometers, etc. CAN 321 may be connected to vehicle control 315 by a CAN bus. CAN 321 may control or receive feedback from sensors within the vehicle. CAN 321 may also be in communication with electronic control units of the vehicle. In other embodiments, the functions of vehicle control 315 may be implemented by multi-core processing environment 400. For example, vehicle control 315 may be omitted and multi-core processing environment 400 may connect directly to LIN 317, vehicle sensors 319, CAN 321, or other components of a vehicle.

In some examples, vehicle interface system 301 includes a systems module 323. Systems module 323 may include a power supply and/or otherwise provide electrical power to vehicle interface system 301. Systems module 323 may include components which monitor or control the platform temperature. Systems module 323 may also perform wake up and/or sleep functions.

Still referring to FIG. 3B, multi-core processing environment 400 may be connected to a tuner control 325. In some examples, tuner control 325 allows multi-core processing environment 400 to connect to wireless signal receivers. Tuner control 325 may be an interface between multi-core processing environment 400 and wireless transmission receivers such as FM antennas, AM antennas, etc. Tuner control 325 may allow multi-core processing environment 400 to receive signals and/or control receivers. In other examples, tuner control 325 includes wireless signal receivers and/or antennas. Tuner control 325 may receive wireless signals as controlled by multi-core processing environment 400. For example, multi-core processing environment 400 may instruct tuner control 325 to tune to a specific frequency.

In some examples, tuner control 325 is connected to one or more FM and AM sources 327, Digital Audio Broadcasting (DAB) sources 329, and/or one or more High Definition (HD) radio sources 331. FM and AM source 327 may be a wireless signal. In some examples, FM and AM source 327 may include hardware such as receivers, antennas, etc. DAB source 329 may be a wireless signal utilizing DAB technology and/or protocols. In other examples, DAB source 329 may include hardware such as an antenna, receiver, processor, etc. HD radio source 331 may be a wireless signal utilizing HD radio technology and/or protocols. In other examples, HD radio source 331 may include hardware such as an antenna, receiver, processor, etc.

In some examples, tuner control 325 is connected to one more amplifiers 333. Amplifier 333 may receive audio signals from tuner control 325. Amplifier 333 amplifies the signal and outputs it to one or more speakers. For example, amplifier 333 may be a four channel power amplifier connected to one or more speakers (e.g., 4 speakers). In some examples, multi-core processing environment 400 may send an audio signal (e.g., generated by an application within multi-core processing environment 400) to tuner control 325, which in turn sends the signal to amplifier 333.

Still referring to FIG. 3B, multi-core processing environment 400 may connected to connector hardware 335-445 which allows multi-core processing environment 400 to receive information from media sources and/or send information to media sources. In other embodiments, multi-core processing environment 400 may be directly connected to media sources, have media sources incorporated within multi-core processing environment 400, and/or otherwise receive and send media information.

In some examples, multi-core processing environment 400 is connected to one or more DVD drives 335. DVD drive 335 provides DVD information to multi-core processing environment 400 from a DVD disk inserted into DVD drive 335. Multi-core processing environment 400 may control DVD drive 335 through the connection (e.g., read the DVD disk, eject the DVD disk, play information, stop information, etc.) In further examples, multi-core processing environment 400 uses DVD drive 335 to write data to a DVD disk.

In some examples, multi-core processing environment 400 is connected to one or more Solid State Drives (SSD) 337. In some examples, multi-core processing environment 400 is connected directly to SSD 337. In other examples, multi-core processing environment 400 is connected to connection hardware which allows the removal of SSD 337. SSD 337 may contain digital data. For example, SSD 337 may include images, videos, text, audio, applications, etc. stored digitally. In further examples, multi-core processing environment 400 uses its connection to SSD 337 in order to store information on SSD 337.

In some examples, multi-core processing environment 400 is connected to one or more Secure Digital (SD) card slots 339. SD card slot 339 is configured to accept an SD card. In some examples, multiple SD card slots 339 are connected to multi-core processing environment 400 that accept different sizes of SD cards (e.g., micro, full size, etc.). SD card slot 339 allows multi-core processing environment 400 to retrieve information from an SD card and/or to write information to an SD card. For example, multi-core processing environment 400 may retrieve application data from the above described sources and/or write application data to the above described sources.

In some examples, multi-core processing environment 400 is connected to one or more video decoders 441. Video decoder 441 may provide video information to multi-core processing environment 400. In some examples, multi-core processing environment 400 may provide information to video decoder 441 which decodes the information and sends it to multi-core processing environment 400.

In some examples, multi-core processing environment 400 is connected to one or more codecs 443. Codecs 443 may provide information to multi-core processing environment 400 allowing for encoding or decoding of a digital data stream or signal. Codec 443 may be a computer program running on additional hardware (e.g., processors, memory, etc.). In other examples, codec 443 may be a program run on the hardware of multi-core processing environment 400. In further examples, codec 443 includes information used by multi-core processing environment 400. In some embodiments, multi-core processing environment 400 may retrieve information from codec 443 and/or provide information (e.g., an additional codec) to codec 443.

In some examples, multi-core processing environment 400 connects to one or more satellite sources 445. Satellite source 445 may be a signal and/or data received from a satellite. For example, satellite source 445 may be a satellite radio and/or satellite television signal. In some examples, satellite source 445 is a signal or data. In other examples, satellite source 445 may include hardware components such as antennas, receivers, processors, etc.

Still referring to FIG. 3B, multi-core processing environment 400 may be connected to input/output devices 441-453. Input/output devices 441-453 may allow multi-core processing environment 400 to display information to a user. Input/output devices 441-453 may also allow a user to provide multi-core processing environment 400 with control inputs.

In some examples, multi-core processing environment 400 is connected to one or more CID displays 447. Multi-core processing environment 400 may output images, data, video, etc. to CID display 447. For example, an application running within multi-core processing environment 400 may output to CID display 447. In some examples, CID display 447 may send input information to multi-core processing environment 400. For example, CID display 447 may be touch enabled and send input information to multi-core processing environment 400.

In some examples, multi-core processing environment 400 is connected to one or more ICD displays 449. Multi-core processing environment 400 may output images, data, video, etc. to ICD display 449. For example, an application running within multi-core processing environment 400 may output to ICD display 449. In some examples, ICD display 449 may send input information to multi-core processing environment 400. For example, ICD display 449 may be touch enabled and send input information to multi-core processing environment 400.

In some examples, multi-core processing environment 400 is connected to one or more HUD displays 451. Multi-core processing environment 400 may output images, data, video, etc. to HUD displays 451. For example, an application running within multi-core processing environment 400 may output to HUD displays 451. In some examples, HUD displays 451 may send input information to multi-core processing environment 400.

In some examples, multi-core processing environment 400 is connected to one or more rear seat displays 453. Multi-core processing environment 400 may output images, data, video, etc. to rear seat displays 453. For example, an application running within multi-core processing environment 400 may output to rear seat displays 453. In some examples, rear seat displays 453 may send input information to multi-core processing environment 400. For example, rear seat displays 453 may be touch enabled and send input information to multi-core processing environment 400.

In further embodiments, multi-core processing environment 400 may also receive inputs from other sources. For example multi-core processing environment 400 may receive inputs from hard key controls (e.g., buttons, knobs, switches, etc.). In some embodiments, multi-core processing environment 400 may also receive inputs from connected devices such as personal media devices, mobile phones, etc. In additional embodiments, multi-core processing environment 400 may output to these devices.

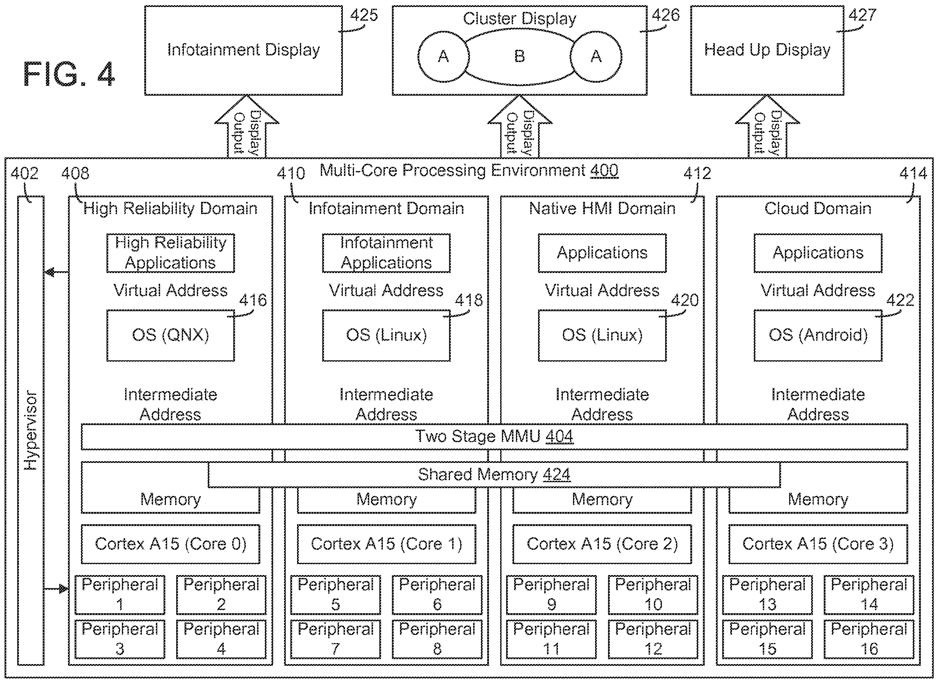

Referring now to FIG. 4, a block diagram illustrating multi-core processing environment 400 in greater detail is shown, according to an exemplary embodiment. In some embodiments, multi-core processing environment 400 is implemented using a system-on-a-chip an ARMv7-A architecture, an ARMv8 architecture, or any other architecture. In other embodiments, multi-core processing environment 400 may include a multi-core processor that is not a system-on-a-chip to provide the same or a similar environment. For example, a multi-core processor may be a general computing multi-core processor on a motherboard supporting multiple processing cores. In further embodiments, multi-core processing environment 400 may be implemented using a plurality of networked processing cores. In one embodiment, multi-core processing environment 400 may be implemented using a cloud computing architecture or other distributed computing architecture.

Multi-core processing environment 400 is shown to include a hypervisor 402. Hypervisor 402 may be integrated with a bootloader or work in conjunction with the bootloader to help create the multi-core processing environment 400 during boot. The system firmware (not shown) can start the bootloader (e.g., U-Boot) using a first CPU core (core 0). The bootloader can load the kernel images and device trees from a boot partition for the guest OSs. Hypervisor 402 can then initialize the data structures used for the guest OS that will run on core 1. Hypervisor 402 can then boot the guest OS for core 1. Hypervisor 402 can then switch to a hypervisor mode, initialize hypervisor registers, and hand control over to a guest kernel. On core 0, hypervisor 402 can then do the same for the guest that will run on core 0 (i.e., initialize the data structures for the guest, switch to the hypervisor mode, initialize hypervisor registers, and hand off control to the guest kernel for core 0). After bootup, the distinction between a primary core and a secondary core may be ignored and hypervisor 402 may treat the two cores equally. Traps may be handled on the same core as the guest that triggered them.

In FIG. 4, multi-core processing environment 400 is shown in a state after setup is conducted by hypervisor 402 and after the guest OSs are booted up to provide domains 408-414. Domains 408-414 can each be responsible for outputting certain areas or windows of a display system such as infotainment display 425, cluster display 426, and/or head up display 427. In some embodiments, cluster display 426 may be an ICD. Cluster display 426 is illustrated as having display areas A and B. High reliability domain 408 may be associated with display areas A. Display areas A may be used to display safety-critical information such as vehicle speed, engine status, vehicle alerts, tire status, or other information from the ECU. The information for display areas A may be provided entirely by domain 408. Display area B may represent a music player application user interface provided by display output generated by infotainment core 410. Cloud domain 414 may provide an internet-based weather application user interface in display area B. Advantageously, system instability, crashes, or other unexpected problems, which may exist in the cloud domain 414 or with the music player running in infotainment core 410, may be completely prevented from impacting or interrupting the operation of display area A or any other process provided by the high reliability domain 408.

Each guest OS may have its own address space for running processes under its operating system. A first stage of a two stage memory management unit (MMU) 404 may translate the logical address used by the guest OS and its applications to physical addresses. This address generated by MMU 404 for the guest OS may be an intermediate address. The second stage of the two stage MMU 404 may translate those intermediate addresses from each guest to actual physical addresses. In addition to being used to map areas of memory to particular guest OSs (and thus particular domains and cores), the second stage of MMU 404 can dedicate memory mapped peripheral devices to particular domains (and thus guest OSs and cores) as shown in FIG. 4.

Hypervisor 402 may be used in configuring the second stage of MMU 404. Hypervisor 402 may allocate physical memory areas to the different guests. Defining these mappings statically during the configuration time helps ensure that the intermediate-to-physical memory mapping for every guest is defined in such a way that they cannot violate each other's memory space. The guest OS provides the first stage memory mapping from the logical to the intermediate memory space. The two stage MMU 404 allows the guest OS to operate as it normally would (i.e., operate as if the guest OS had ownership of the memory mapping), while allowing an underlying layer of mapping to ensure that the different guest OSs (i.e., domains) remain isolated from each other.

As illustrated in FIG. 4, while sharing the same display (cluster display 426) and sharing much of the same hardware (e.g., a system-on-a-chip), the architecture of FIG. 4 provides for partitioning between domains. The architecture shown in FIG. 4 provides a computer system for integration with a vehicle user interface (e.g., input devices, display 426). In some embodiments, multi-core processing environment 400 includes a multi-core processor. Multi-core processing environment 400 may be configured to provide virtualization for a first guest operating system (e.g., QNX OS 416) in a first core (e.g., Core 0) or cores of the multi-core processor. Multi-core processing environment 400 may be configured to provide virtualization for at least a second guest operating system (e.g., Linux OS 418) in a second and different core (e.g., Core 1) or cores of the multi-core processor. The first guest operating system (e.g., "real time" QNX OS 416) may be configured for high reliability operation. The dedication of an operating system to its own core using asymmetric multi-processing (AMP) to provide the virtualization advantageously helps to prevent operations of the second guest operating system (e.g., Linux OS 418) from disrupting the high reliability operation of the first guest operating system (e.g., QNX OS 416).

The high reliability domain 408 can have ECU inputs as one or more of its assigned peripherals. For example, the ECU may be Peripheral 1 assigned to high reliability domain 408. Peripheral 2 may be another vehicle hardware device such as the vehicle's controller area network (CAN). Given the partitioning between domains, infotainment domain 410, native HMI domain 412, and cloud domain 414 may not be able to directly access the ECU or the CAN. If ECU or CAN information is used by other domains (e.g., 410, 414) the information can be retrieved by high reliability domain 408 and placed into shared memory 424.

In an exemplary embodiment, multiple separate screens such as cluster display 426 can be provided with the system such that each screen contains graphical output from one or more of the domains 408-414. One set of system peripherals (e.g., an ECU, a Bluetooth module, a hard drive, etc.) may be used to provide one or multiple screens using a single multi-core system on a chip. The domain partitioning described herein can effectively separate the safety related driver information operating system (e.g., high reliability domain 408) from the infotainment operating system (e.g., infotainment domain 410), the internet/app operating system, and/or the cloud operating system (e.g., cloud domain 414).

Various operating systems can generate views of their applications to be shown on screens with other operating domains. Different screens may be controlled by different domains. For example, the cluster display 426 may primarily be controlled by high reliability domain 408, whereas infotainment display 425 may primarily be controlled by infotainment domain 410. Various graphic outputs generated by domains 408-414 are described in greater detail in subsequent figures. Despite this control, views from domains 410, 414 can be shown on the cluster display 426. A shared memory 424 may be used to provide the graphic views from the domains 410, 414 to the domain 408. Particularly, pixel buffer content may be provided to the shared memory 424 from domains 410, 414 for use by domain 408. In an exemplary embodiment, a native HMI domain 412 (e.g., having a linux OS 420) is used to coordinate graphical output, constructing display output using pixel buffer content from each of domains 408, 410, and 414.

Advantageously, because a single system is used to drive multiple displays and bring together multiple domains, the user may be able to configure which domain or application content will be shown where (e.g., cluster display 426, infotainment display 425, head up display 427, a rear seat display, etc.). For example, the user can configure information cluster display 426 to display information from high reliability domain 408, infotainment domain 410, native HMI domain 412, cloud domain 414, and/or any other domain that generates display content. Similarly, the user can configure infotainment display 425 and/or head up display 427 to display information from high reliability domain 408, infotainment domain 410, native HMI domain 412, cloud domain 414, and/or any other domain. Content from different domains may be displayed on different portions of the same display (e.g., in different virtual operating fields) or on different displays. The virtual operating fields used to display content from various applications can be moved to different displays, rearranged, repositioned, resized, or otherwise adjusted to suit a user's preferences.

In some embodiments, on-board peripherals are assigned to particular operating systems. The on-board peripherals might include device ports (GPIO, I2C, SPI, UART), dedicated audio lines (TDM, I2S) or more other controllers (Ethernet, USB, MOST). Each OS is able to access the I/O devices directly. I/O devices are thus assigned to individual OSs. The second stage memory management unit (MMU) 404 maps intermediate addresses assigned to the different operating systems/domains to the peripherals.

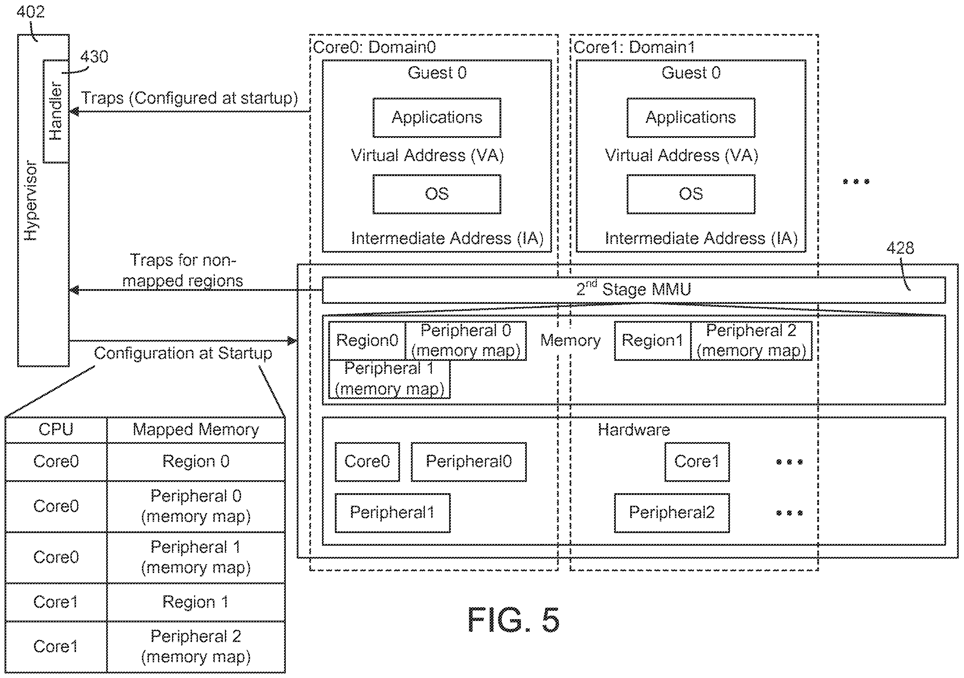

Referring to FIG. 5, a block diagram illustrating the use of a second stage MMU 428 to allocate devices to individual guest OSs on particular domains is shown, according to an exemplary embodiment. Second stage MMU 428 may be a component of two stage MMU 424, as described with reference to FIG. 4. Hypervisor 402 is shown configuring second stage MMU 428 during boot. Hypervisor 402 may setup page tables for second stage MMU 428, translating intermediate addresses (IA) to physical addresses (PA). In some examples, second stage MMU 428 can map any page (e.g., a 4 kB page) from the IPA space to any page from the PA space. The mapping can be specified as read-write, read-only, write-only, or to have other suitable permissions. To setup the page tables, hypervisor 402 can use memory range information available in hypervisor 402's device tree. This arrangement advantageously provides a single place to configure what devices are assigned to a guest and both hypervisor 402 and the guest kernel can use the device tree.

A simplified example of the mapping conducted by hypervisor 402 at startup is shown in FIG. 5. Core 0 may be assigned memory region 0, memory mapped peripheral 0, and memory map peripheral 1. Core 1 is assigned memory region 1 and peripheral 2. The configuration would continue such that each core is assigned with the memory mapped regions specified in its OSs device tree. When a guest domain attempts to access pages that are unmapped according to the page table managed by second stage MMU 428, the processor core for the guest may raise an exception, thereby activating hypervisor 402 and invoking the hypervisor 402's trap handler 430 for data or instruction abort handling. In an exemplary embodiment, there is a 1:1 mapping of operating systems to CPU cores and no scheduling is conducted by the hypervisor. Advantageously, these embodiments reduce the need for virtual interrupt management and the need for a virtual CPU interface. When a normal interrupt occurs, each CPU can directly handle that interrupt with its guest OS.

Hypervisor 402 may support communication between two guest operating systems running in different domains. As described above, shared memory is used for such communications. When a particular physical memory range is specified in the device tree of two guests, that memory range is mapped to both cores and is accessible as shared memory. For interrupts between guest OSs, an interrupt controller is used to assert and clear interrupt lines. According to an exemplary embodiment, the device tree for each virtual device in the kernel has a property "doorbells" that describes what interrupts to trigger for communication with the other core. The doorbell is accessed using a trapped memory page, whose address is also described in the device tree. On the receiving end, the interrupt is cleared using the trapped memory page. This enables interrupt assertion and handling without any locking and with relatively low overhead compared to traditional device interrupts.

In an exemplary embodiment, guest operating systems are not allowed to reset the whole system. Instead, the system is configured to support the resetting of an individual guest (e.g., to recover from an error situation). Hypervisor 402 can create a backup copy of the guest operating system's kernel and device tree and to store the information in a hypervisor-protected memory area. When the guest attempts to reset the system, a hypervisor trap will initiate a guest reset. This guest reset will be conducted by restoring the kernel and device tree from the backup copy, reinitializing the assigned core's CPU state, and then handling control back to the guest for bootup of the guest.

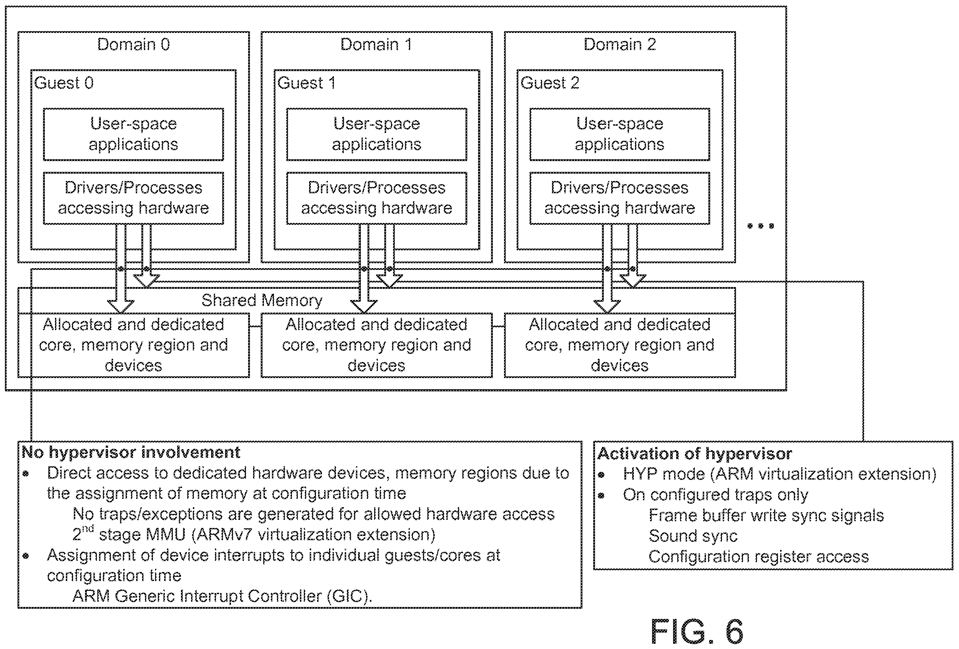

Referring now to FIGS. 4-6, once hypervisor 402 performs the initial configuration and allocation of resources, hypervisor 402 may become dormant during normal operation. Hypervisor 402 may become active only when an unexpected trap occurs. This aspect of hypervisor 402 is variously illustrated in each of FIGS. 4, 5 and 6. As illustrated in FIG. 6, there is no hypervisor involvement in a guest OS's direct access to dedicated hardware devices or memory regions due to the assignment of the memory at configuration time (see FIG. 5). A hypervisor access mode ("HYP" mode on some ARM processors such as the Cortex A15) can access the hardware platform under a higher privilege level than any individual guest OS. The hypervisor, running in the high privilege HYP mode can control traps received. These traps can include frame buffer write synchronization signals, sound synchronization signals, or access to configuration registers (e.g., clock registers, coprocessor registers).

In an exemplary embodiment, hypervisor 402 is not involved in regular interrupt distribution. Rather, an interrupt controller (e.g., a Generic Interrupt Controller on some ARM chips) can handle the delivery to the proper core. Hypervisor 402 can configure the interrupt controller during boot. As described above, the inter-guest OS communication is based on shared memory and interrupts. Traps and write handlers are configured to send interrupts between the cores.

As illustrated in FIG. 6, device interrupts may be assigned to individual guest OSs or cores at configuration time by hypervisor 402. During initialization, hypervisor 402 can run an interrupt controller (e.g., GIC) setup which can set values useful during bootup. As each guest gets booted, hypervisor 402 can read the interrupt assignments from the guest's device tree. Hypervisor 402 can add an interrupt read in such a manner to an IRQ map that is associated with the proper CPU core. This map may be used by the distributor during runtime. Hypervisor 402 can then enable the interrupt for the proper CPU core. Whenever a guest OS attempts to access the distributor, a trap may be registered. Reads to the distributor may not be trapped, but are allowed from any guest OS. Write accesses to the distributor are trapped and the distributor analyzes whether the access should be allowed or not.

In an exemplary embodiment, the system provides full hardware virtualization. There is no need for para-virtualized drivers for I/O access as each guest can access its dedicated peripherals directly. A portion of the memory not allocated to the individual domains can be kept for hypervisor code and kernel images. This memory location will not be accessible by any guest OS. Kernel images are loaded into this memory as backup images during the boot process. Hypervisor 402 may be trapped on reset to reboot the individual OSs.

In the case of crash of an individual guest OS, this property advantageously allows the remainder of the system to function while the crashed OS is able to reboot without affecting the other OSs. In an exemplary embodiment, no meta-data is allowed from the non-secure domain to the secure domain. For example, with reference to FIG. 4, the transfer of meta-data is not allowed from the cloud domain 414 to the high reliability domain 408. No interface access (e.g., remote procedure calls) of the secure guest (i.e., the high reliability domain) are allowed.

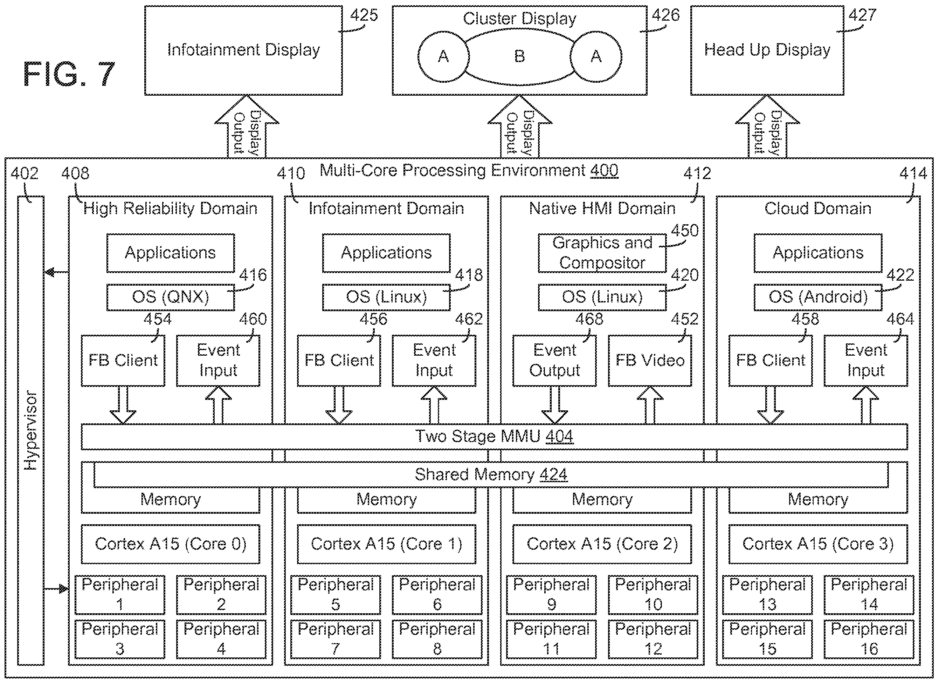

Referring now to FIG. 7, an illustration of system components to facilitate display output on a common display system is shown, according to an exemplary embodiment. As shown in FIG. 7, the native HMI domain 412 includes a graphics and compositor component 450. Graphics and compositor component 450 generally serves to combine frame buffer information (i.e., graphic data) provided to it by the other domains (e.g., 408, 410, 414) and/or generated by itself (i.e., on native HMI domain 412). This flow of data is highlighted in FIG. 7. Native HMI domain 412 is shown to include a frame buffer ("FB") video module 452 while the other domains each contain a frame buffer client module (i.e., FB clients 454, 456, 458).

In an exemplary embodiment, hypervisor 402 provides virtual devices that enable efficient communications between the different virtual machines (guest OSs) in the form of shared memory and interrupts. FB client modules 454, 456, 458 and FB video module 452 may be Linux (or QNX) kernel modules for virtual devices provided by hypervisor 402, thereby exposing the functionality to the user space of the guest OSs. In an exemplary embodiment, instead of providing raw access to the memory area, modules 452-458 implement slightly higher level APIs such as Linux frame buffer, Video for Linux 2, evdev, ALSA, and network interfaces. This has the advantage that existing user space software such as user space of Android can be used without modification.

In an exemplary embodiment, the virtual devices provided by the hypervisor 402 use memory-mapped I/O. Hypervisor 402 can initialize the memory regions using information from a device tree. The devices can use IRQ signals and acknowledgements to signal and acknowledge inter-virtual machine interrupts, respectively. This can be achieved by writing to the register area which is trapped by hypervisor 402. An example of a device tree entry for a virtual device with 16M of shared memory, an interrupt, and a doorbell is shown below. In some embodiments, writing into the doorbell register triggers and interrupt in the target virtual machine:

```
mosx-example@f1000000 {
              compatible = "mosx-example", "ivmc";
              reg = <0xf0100000 0x1000>,
                          <0xf1000000 0x1000000>;
              interrupts = <0 145 4>;
              doorbells = <144>;
       };
```

Each domain may utilize a kernel module or modules representing a display and an input device. For domains 408, 410, 414, the module or modules provide a virtual framebuffer (e.g., FB client 454, 456, 458) and a virtual input device (e.g., event input 460, 462, 464). For the compositor domain (e.g., domain 412) a kernel module or module exists to provide a virtual video input 452 and a virtual event output device 468. Memory is dedicated for each domain to an event buffer and a framebuffer. The pixel format for the framebuffer may be any of a variety of different formats (e.g., ARGB32, RGBA, BGRA, etc.). Interrupts may be used between the modules to, for example, signal that an input event has been stored in a page of the shared memory area. Upon receiving the interrupt, the virtual device running on the receiving domain may then get the input event from shared memory and provide it to the userspace for handling.

On the video side, a buffer page may be populated by a FB client and, when a user space fills a page, a signal IRQ can be provided to the compositor. The compositor can then get the page from shared memory and provide it to any user space processes waiting for a new frame. In this way, native HMI domain 412 can act as a server for the purpose of graphics and as a client for the purpose of input handling. Inputs (e.g., touch screen inputs, button inputs, etc.) are provided by the native HMI 412 domain's event output 468 to the appropriate event input 460, 462, 464. Frame buffers are filled by the domains 408, 410, 414 and their FB clients 454, 456, 458 provide the frame buffer content to the native HMI domain using frame buffer video 452.

Both events and frame buffer content are passed from domain to domain using shared memory. Each guest operating system or domain therefore prepares its own graphical content (e.g., a music player application prepares its video output) and this graphical content is provided to the compositor for placing the various graphics content from the various domain at the appropriate position on the combined graphics display output. Referring to cluster display 426, for example, applications on high reliability domain 408 may create graphics for spaces A on the display 426. Such graphics content may be provided to FB client 454 and then to FB video 452 via shared memory 424.

Graphics content from the infotainment domain can be generated by applications running on that domain. The domain can populate FB client 456 with such information and provide the frame buffer content to FB video 452 via shared memory 424. With frame buffer content from domain 408 and 410, the compositor can cause the display of the combined scene on cluster display 426. Such graphical display advantageously occurs without passing any code or metadata from user space to user space. The communication of graphics and event information may be done via interrupt-based inter-OS communication. Advantageously, each core/OS may operate as it would normally using asymmetric multiprocessing. Hypervisor 402 may not conduct core or OS scheduling. No para-virtualization is present, which provides a high level of security, isolation and portability.

Virtual networking interfaces can also be provided for use by each domain. To the OS user space it appears as a regular network interface with a name and MAC address (configurable in a device tree). The shared memory may include a header page and two buffers for the virtual networking interface. The first buffer can act as a receive buffer for a first guest and as a send buffer for the second guest. The second buffer is used for the inverse role (as a send buffer for the first guest and as a receive buffer for the second guest). The header can specify the start and end offset of a valid data area inside the corresponding buffer. The valid data area can include a sequence of packets. A single interrupt may be used to signal the receiving guest that a new packet has been written to the buffer. More specifically, the transmitting domain writes the packet size, followed by the packet data to a send buffer in the shared memory. On the incoming side, an interrupt signals the presence of incoming packets. The packets received by the system are read and forwarded to the guest OS's network subsystem by the receiving domain. One of the domains can control the actual and reception by the hardware component. A virtual sound card can be present in the system. The playback and capture buffers can operate in a manner similar to that provided by the client/server frame buffers described with reference to FIG. 7.

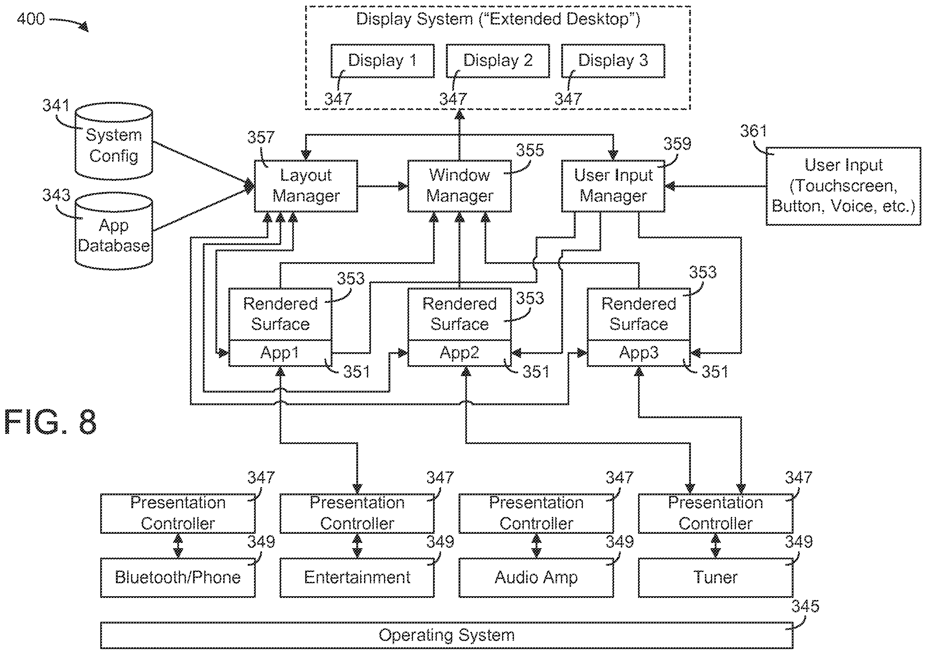

Referring now to FIG. 8, various operational modules running within multi-core processing environment 400 are shown, according to an exemplary embodiment. The operational modules are used in order to generate application images (e.g., graphic output) for display on display devices within the vehicle. Application images may include frame buffer content. The operational modules may be computer code stored in memory and executed by computing components of multi-core processing environment 400 and/or hardware components. The operational modules may be or include hardware components. In some embodiments, the operational modules illustrated in FIG. 8 are implemented on a single core of multi-core processing environment 400. For example, native HMI domain 412 as illustrated in FIG. 4 may include the operational modules discussed herein. In other embodiments, the operating modules discussed herein may be executed and/or stored on other domains and/or on multiple domains.

In some embodiments, multi-core processing environment 400 includes system configuration module 341. System configuration module 341 may store information related to the system configuration. For example, system configuration module 341 may include information such as the number of connected displays, the type of connected displays, user preferences (e.g., favorite applications, preferred application locations, etc.), default values (e.g., default display location for applications), etc.

In some embodiments, multi-core processing environment 400 includes application database module 343. Application database module 343 may contain information related to each application loaded and/or running in multi-core processing environment 400. For example, application database module 343 may contain display information related to a particular application (e.g., item/display configurations, colors, interactive elements, associated images and/or video, etc.), default or preference information (e.g., whitelist" or "blacklist" information, default display locations, favorite status, etc.), etc.

In some embodiments, multi-core processing environment 400 includes operating system module 345. Operating system module 345 may include information related to one or more operating systems running within multi-core processing environment 400. For example, operating system module 345 may include executable code, kernel, memory, mode information, interrupt information, program execution instructions, device drivers, user interface shell, etc. In some embodiments, operating system module 345 may be used to manage all other modules of multi-core processing environment 400.

In some embodiments, multi-core processing environment 400 includes one or more presentation controller modules 347. Presentation controller module 347 may provide a communication link between one or more component modules 349 and one or more application modules 351. Presentation controller module 347 may handle inputs and/or outputs between component module 349 and application module 351. For example, presentation controller 347 may route information form component module 349 to the appropriate application. Similarly, presentation controller 347 may route output instructions from application module 351 to the appropriate component module 349. In some embodiments, presentation controller module 347 may allow multi-core processing environment 400 to preprocess data before routing the data. For example presentation controller 347 may convert information into a form that may be handled by either application module 351 or component module 349.

In some embodiments, component module 349 handles input and/or output related to a component (e.g., mobile phone, entertainment device such as a DVD drive, amplifier, signal tuner, etc.) connected to multi-core processing environment 400. For example, component module 349 may provide instructions to receive inputs from a component. Component module 349 may receive inputs from a component and/or process inputs. For example, component module 349 may translate an input into an instruction. Similarly, component module 349 may translate an output instruction into an output or output command for a component. In other embodiments, component module 349 stores information used to perform the above described tasks. Component module 349 may be accessed by presentation controller module 347. Presentation controller module 347 may then interface with an application module 351 and/or component.

Application module 351 may run an application. Application module 351 may receive input from presentation controller 347, window manager 355, layout manager 357, and/or user input manager 359. Application module 351 may also output information to presentation controller 347, window manager 355, layout manager 357, and/or user input manager 359. Application module 351 performs calculations based on inputs and generates outputs. The outputs are then sent to a different module. Examples of applications include a weather information application which retrieves weather information and displays it to a user, a notification application which retrieves notifications from a mobile device and displays them to a user, a mobile device interface application which allows a user to control a mobile device using other input devices, games, calendars, video players, music streaming applications, etc. In some embodiments, application module 351 handles events caused by calculations, processes, inputs, and/or outputs. Application module 351 may handle user input and/or update an image to be displayed (e.g., rendered surface 353) in response. Application module 351 may handle other operations such as exiting an application launching an application, etc.

Application module 351 may generate one or more rendered surfaces 353. A rendered surface is the information which is displayed to a user. In some embodiments, rendered surface 353 includes information allowing for the display of an application through a virtual operating field located on a display. For example, rendered surface 353 may include the layout of elements to be displayed, values to be displayed, labels to be displayed, fields to be displayed, colors, shapes, etc. In other embodiments, rendered surface 353 may include only information to be included within an image displayed to a user. For example, rendered surface 353 may include values, labels, and/or fields, but the layout (e.g., position of information, color, size, etc.) may be determined by other modules (e.g., layout manager 357, window manager 355, etc.).

In some embodiments, application modules 351 are located on different domains. For example, an application module 351 may be located on infotainment domain 410 with another application module located on cloud domain 414. Application modules 351 on different domains may pass information and/or instructions to modules on other domains using shared memory 424. A rendered surface 353 may be passed from an application module 351 to native HMI domain 412 as a frame buffer. Application modules 351 on different domains may also receive information and/or instructions through shared memory 424. For example, a user input may be passed from native HMI domain 412 as event output to shared memory 424, and an application module 351 on a different domain may receive the user input as an event input from shared memory 424.

Window manager 355 manages the display of information on one or more displays 347. In some embodiments, windows manager 355 takes input from other modules. For example, window manager 355 may use input from layout manager 357 and application module 351 (e.g., rendered surface 353) to compose an image for display on display 347. Window manager 355 may route display information to the appropriate display 347. Input from layout manger 357 may include information from system configuration module 341, application database module 343, user input instructions to change a display layout from user input manager 359, a layout of application displays on a single display 347 according to a layout heuristic or rule for managing virtual operating fields associated with a display 347, etc. Similarly, window manager 355 may handle inputs and route them to other modules (e.g., output instructions). For example, window manager 355 may receive a user input and redirect it to the appropriate client or application module 351. In some embodiments, windows manager 355 can compose different client or application surfaces (e.g., display images) based on X,Y, or Z order. Windows manager 355 may be controlled by a user through user inputs. Windows manager 355 may communicate to clients or applications over a shell (e.g., Wayland shell). For example, window manager 355 may be a X-Server window manager, Windows window manager, Wayland window manager, Wayland server, etc.).

Layout manager 357 generates the layout of applications to be displayed on one or more displays 347. Layout manager 357 may acquire system configuration information for use in generating a layout of application data. For example, layout manager 357 may acquire system configuration information such as the number of displays 347 including the resolution and location of the displays 347, the number of window managers in the system, screen layout scheme of the monitors (bining), vehicle states, etc. In some embodiments, system configuration information may be retrieved by layout manager 357 from system configuration module 341.

Layout manager 357 may also acquire application information for use in generating a layout of application data. For example, layout manager 357 may acquire application information such as which applications are allowed to be displayed on which displays 347 (e.g., HUD, CID, ICD, etc.), the display resolutions supported by each application, application status (e.g., which applications are running or active), track system and/or non-system applications (e.g., task bar, configuration menu, engineering screen etc.), etc.

In some embodiments, layout manager 357 may acquire application information from application database module 343. In further embodiments, layout manager 357 may acquire application information from application module 351. Layout manager 357 may also receive user input information. For example, an instruction and/or information resulting from a user input may be sent to layout manager 357 from user input manager 359. For example, a user input may result in an instruction to move an application from one display 347 to another display 347, resize an application image, display additional application items, exit an application, etc. Layout manager 357 may execute an instruction and/or process information to generate a new display layout based wholly or in part on the user input.

Layout manager 357 may use the above information or other information to determine the layout for application data (e.g., rendered surface 353) to be displayed on one or more displays. Many layouts are possible. Layout manager 357 may use a variety of techniques to generate a layout as described herein. These techniques may include, for example, size optimization, prioritization of applications, response to user input, rules, heuristics, layout databases, etc.

Layout manager 357 may output information to other modules. In some embodiments, layout manager 357 sends an instruction and/or data to application module 351 to render application information and/or items in a certain configuration (e.g., a certain size, for a certain display 347, for a certain display location (e.g., virtual operating field), etc. For example, layout manager 357 may instruct application module 351 to generate a rendered surface 353 based on information and/or instructions acquired by layout manager 357.

In some embodiments, rendered surface 353 or other application data may be sent back to layout manager 357 which may then forward it on to widow manager 355. For example, information such as the orientation of applications and/or virtual operating fields, size of applications and/or virtual operating fields, which display 347 on which to display applications and/or virtual operating fields, etc. may be passed to window manager 355 by layout manager 357. In other embodiments, rendered surface 353 or other application data generated by application module 351 in response to instructions from layout manager 357 may be transmitted to window manager 355 directly. In further embodiments, layout manager 357 may communicate information to user input manager 359. For example, layout manager 357 may provide interlock information to user input manager 359 to prevent certain user inputs.

Multi-core processing environment 400 may receive user input 361. User input 361 may be in response to user inputs such as touchscreen input (e.g., presses, swipes, gestures, etc.), hard key input (e.g., pressing buttons, turning knobs, activating switches, etc.), voice commands, etc. In some embodiments, user input 361 may be input signals or instructions. For example, input hardware and/or intermediate control hardware and/or software may process a user input and send information to multicore processing environment 400. In other embodiments, multi-core processing environment 400 receives user input 361 from vehicle interface system 301. In further embodiments, multi-core processing environment 400 receives direct user inputs (e.g., changes in voltage, measured capacitance, measured resistance, etc.). Multi-core processing environment 400 may process or otherwise handle direct user inputs. For example, user input manager 359 and/or additional module may process direct user input.

User input manager 359 receives user input 361. User input manager 359 may process user inputs 361. For example, user input manager 359 may receive a user input 361 and generate an instruction based on the user input 361. For example, user input manager 359 may process a user input 361 consisting of a change in capacitance on a CID display and generate an input instruction corresponding to a left to right swipe on the CID display. User input manager may also determine information corresponding to a user input 361. For example, user input manager 359 may determine which application module 351 corresponds to the user input 361. User input manager 359 may make this determination based on the user input 361 and application layout information received from layout manager 357, window information from window manager 355, and/or application information received from application module 351.

User input manager 359 may output information and/or instructions corresponding to a user input 361. Information and/or instructions may be output to layout manager 357. For example, an instruction to move an application from one display 347 to another display 347 may be sent to layout manager 357 which instructs application modules 351 to produce an updated rendered surface 353 for the corresponding display 347. In other embodiments, information and/or instructions may be output to window manager 355. For example, information and/or instruction may be output to window manager 355 which may then forward the information and/or instruction to one or more application modules 351. In further embodiments, user input manager 359 outputs information and/or instructions directly to application modules 351.

In some embodiments, system configuration module 341, application database module 343, layout manager 357, window manager 355, and our user input manager 359 may be located on native HMI domain 412. The functions described above may be carried out using shared memory 424 to communicate with modules located on different domains. For example, a user input may be received by user input manager 359 located on native HMI domain 412. The input may be passed to an application located on another domain (e.g., infotainment domain 410) through shared memory 424 as an event. Application module 351 which receives the input may generate a new rendered surface 353. The rendered surface 353 may be passed to layout manager 237 and/or window manager 355 located on native HMI domain 412 as a frame buffer client using shared memory 424. Layout manager 357 and/or window manager 355 may then display the information using display 347. The above is exemplary only. Multiple configurations of modules and domains are possible using shared memory 424 to pass instructions and/or information between domains.

Rendered surfaces 353 and/or application information may be displayed on one or more displays 347. Displays 347 may be ICDs, CIDs, HUDs, rear seat displays, etc. In some embodiments, displays 347 may include integrated input devices. For example a CID display 347 may be a capacitive touchscreen. One or more displays 347 may form a display system (e.g., extended desktop). The displays 347 of a display system may be coordinated by one or modules of multi-core processing environment 400. For example, layout manager 357 and/or window manager 355 may determine which applications are displayed on which display 347 of the display system. Similarly, one or more module may coordinate interaction between multiple displays 347. For example, multi-core processing environment 400 may coordinate moving an application from one display 347 to another display 347.

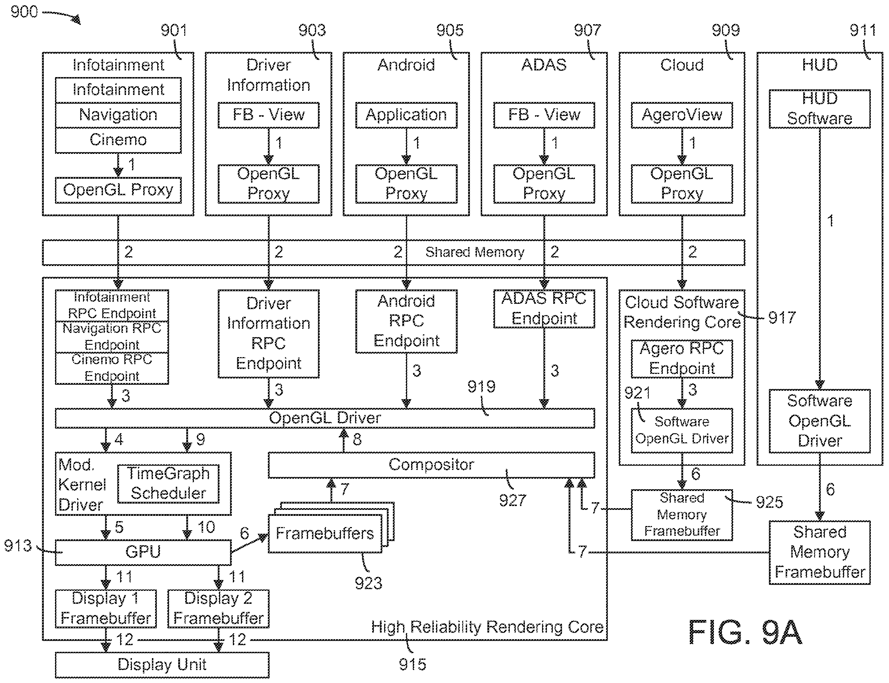

Referring now to FIG. 9A, a flow diagram illustrating a system 900 and method for GPU sharing is shown, according to an exemplary embodiment. System 900 is shown to include a plurality of domains 901-911 (i.e., an infotainment domain 901, a driver information domain 903, an android domain 905, an ADAS domain 907, a cloud domain 909, and a HUD domain 911). In various embodiments, system 900 may include any combination of the illustrated domains 901-911 or any other type of domain as described above. Each domain 901-911 may include various applications (e.g., infotainment, navigation, FB-view, HUD software, etc.) with tasks to be executed by the GPU. Advantageously, a single GPU 913 may be used to execute tasks provided by the various applications. In other embodiments, multiple GPUs may be used to execute tasks provided by the various applications.

In some embodiments, the applications pass tasks to a proxy (e.g., an OpenGL proxy as shown) (step 1). For example, the infotainment domain 901, android domain 903, driver information domain 905, ADAS domain 907, and cloud domain 909 are each shown passing tasks to an OpenGL proxy associated with the domain. The HUD domain 911 may pass tasks to a software OpenGL driver, as the tasks are generated by HUD-related software.

Still referring to FIG. 9A, system 900 is shown to include a high reliability rendering core 915 (e.g., a Linux rendering core) and a cloud software rendering core 917. Rendering cores 915-917 may include a plurality of remote procedure call (RPC) endpoints (e.g., an infotainment RPC endpoint, a driver information RPC endpoint, an Android RPC endpoint, an ADAS RPC endpoint, etc.). Each RPC endpoint may be configured to manage tasks for a particular domain.

In some embodiments, each RPC endpoint receives tasks from a proxy of the corresponding domain 901-909 (step 2). For example, each RPC endpoint may be designated for a particular domain or a particular application thereof. The tasks may be received from domains 901-909 and stored in a shared memory for retrieval by the RPC endpoints. In an exemplary embodiment, cloud domain 909 may have a different software rendering core 917, as the applications of cloud domain 909 may be configured differently from the other applications more directly associated with the vehicle.

The RPC endpoints may deliver the tasks from the various applications to an OpenGL driver (step 3). Some RPC endpoints are shown delivering tasks to the OpenGL 919 driver of the high reliability rendering core 915 whereas other RPC endpoints are shown delivering tasks to the software OpenGL driver 921 within the cloud software rendering core 917. OpenGL driver 919 may be configured to manage the tasks to be provided to the GPU 913 for processing. As shown in FIG. 9A, tasks received at the software OpenGL driver 921 may be tasks from cloud domain 909. Tasks received from cloud domain 909 may not need to be provided to a GPU for processing because such tasks can be rendered on a display without further processing by GPU 913.

Still referring to FIG. 9A, the tasks from OpenGL driver 919 may be provided to a scheduler (e.g., a TimeGraph scheduler) of a kernel driver (step 4). The scheduler may be configured to determine which of the tasks from OpenGL driver 919 to send to GPU 913 and/or an order in which to send the tasks. In some embodiments, the scheduler prioritizes tasks related to vehicle safety and/or critical vehicle operations. The task scheduling process is described in greater detail in subsequent figures. The scheduler provides tasks to GPU 913 for processing (step 5), and GPU 913 processes the tasks (e.g., determining a display configuration for a display of the vehicle related to the task).

After GPU 913 processes a task, the task is provided to a framebuffer 923 for the domain associated with the task (step 6). In some embodiments, a series of tasks in combination are provided to framebuffer 923 concurrently. Individual and single tasks may change states within GPU 913 and may be provided to framebuffer 923 when a sufficient number of tasks have been processed to generate the framebuffer. GPU 913 may process the tasks by identifying the various components, and configuration thereof, of the task or domain to be displayed. In other words, framebuffers 923 may be configured to store "pieces" of each task or domain to be displayed. For example, for a navigation task, the various components stored in a framebuffer 923 related to the infotainment domain may relate to a map display and configuration, icons, text, etc. A weather task may include various components such as texts and graphical symbols of weather such as clouds and sun, and so forth. Also in step 6, the software-based tasks that are already processed away from high reliability rendering core 915 (e.g., by cloud software rendering core 917) may be sent to a shared memory framebuffer 925 designated for the particular domain. As with framebuffers 923, shared memory framebuffer 925 may receive various components (e.g., "pieces") of the task.

Still referring to FIG. 9A, framebuffers 923 and shared memory framebuffer 925 may provide the processed tasks and information to a compositor 927 (step 7). Compositor 927 may assemble the various components received from framebuffers 923 and 925. Compositor 927 may be configured to determine an appropriate configuration for the display. For example, compositor 927 may determine on which display a task should be shown, dimensions of the display, a configuration of the various icons and text within the display, whether or not to display a particular component, etc. Compositor 927 may determine a task with high importance should be displayed in a HUD display, a task with low importance in a CID display, etc. As another example, Compositor 927 may determine if a component (e.g., a video) should or should not be displayed. Compositor 927 may resize icons, text, or other components of a display, rearrange tasks (e.g., in multiple displays, in the same display, etc.). Compositor 927 may assemble the various components into an assembled task.

Compositor 927 may provide the assembled task to OpenGL driver 919 (step 8). After determining a configuration for a task, compositor 927 may provide the task to OpenGL driver 919 for subsequent processing by the GPU and display. The assembled task may be passed to the scheduler (step 9), and the scheduler may pass the assembled task to GPU 913 for processing (step 10). GPU 913 may process the assembled task to generate a display relating to the task. For example, multiple framebuffers may be combined into a single framebuffer. After the assembled task is processed by GPU 913, the GPU 913 may pass the task to a framebuffer relating to the particular display on which the task is to be displayed (e.g., display framebuffer 1, display framebuffer 2, etc.) (step 11). The framebuffer may pass the task to the display unit of the selected display for display in the vehicle (step 12).

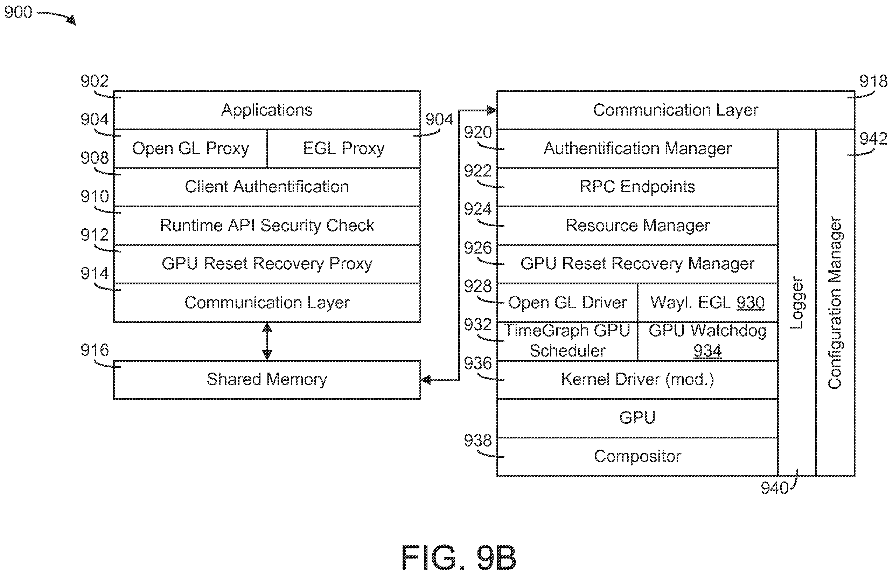

Referring now to FIG. 9B, a block diagram illustrating GPU sharing system 900 in greater detail is shown, according to an exemplary embodiment. System 900 is shown to include various CPU components 902-916 and GPU components 918-942.

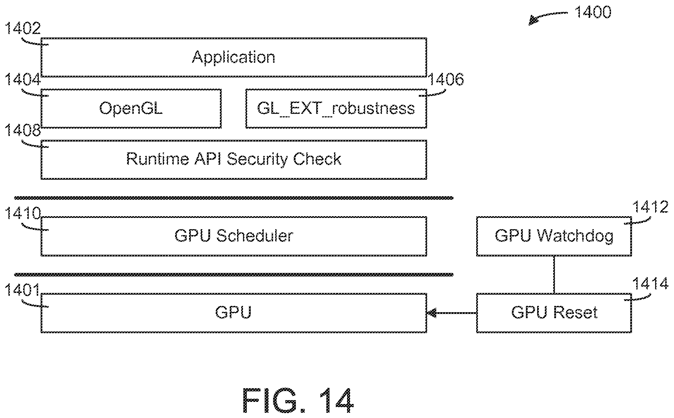

CPU components 902-916 are shown to include a plurality of applications 902. Applications 902 may originate from a domain as described above. The CPU components may further include an OpenGL proxy 904 and EGL proxy 906. Proxies 904, 906 may be configured to serve as intermediaries for the various tasks between applications 902 and the GPU. The CPU components may further include a client authentication block 908, a runtime API security 910, and a GPU reset recovery proxy 912. Client authentication block 908 may be configured to authenticate tasks provided by the various applications 902 of the domains. Runtime API security 910 may be configured to ensure compatibility between the various domains and the displays of the vehicle (described in greater detail in FIG. 14). In some embodiments, runtime API security 910 is used to check the safety of OpenGL commands and shaders. GPU reset recovery proxy 912 may be configured to serve as an intermediary between applications 902 and the GPU when the GPU resets or encounters a problem.

CPU components 902-916 are shown to include a communication layer 914 and GPU components 918-942 are shown to include a communication layer 918. Communications layers 914 and 918 may be configured to communicated with a shared memory 916 and/or using Internet protocols such as TCP/IP or UDP. Communication layers 914, 918 may be configured to communicate with shared memory 916 to send and receive tasks stored in memory 916.

GPU components 918-942 are shown to include an authentication manager 920. Authentication manager 920 may receive authentication information determined by client authentication 908 and use the information to verify the tasks to be processed. GPU components 918-942 are shown to further include RPC endpoints 922. RPC endpoints 922 may be configured to manage tasks for a particular domain, as described with reference to FIG. 8.

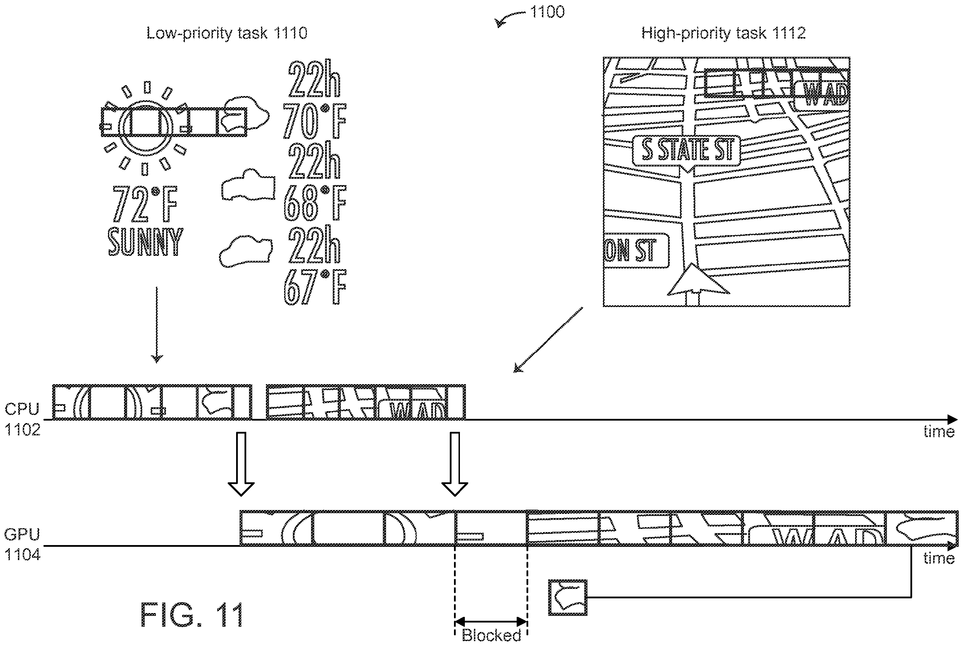

GPU components 918-942 are shown to include a resource manager 924 configured to manage GPU resources. Resource manager 924 may track and allow the allocation of memory by applications in the GPU domain. Resource manager 924 is described in greater detail in FIGS. 11-13. GPU components 918-942 may further include a reset recovery manager 926 configured to manage the GPU, the OpenGL driver, and application behavior when the GPU is reset.

GPU components 918-942 may further include an OpenGL driver 928 and an EGL driver 930. Drivers 928, 930 may manage buffer management activities for the GPU (e.g., receiving tasks). In other words, drivers 928, 930 manage communications between the various domains and the GPU. In some embodiments, OpenGL proxy 904 and OpenGL driver 928 implement a Wayland proxy and Wayland endpoint. EGL driver 930 may be, for example, a Wayland EGL driver.

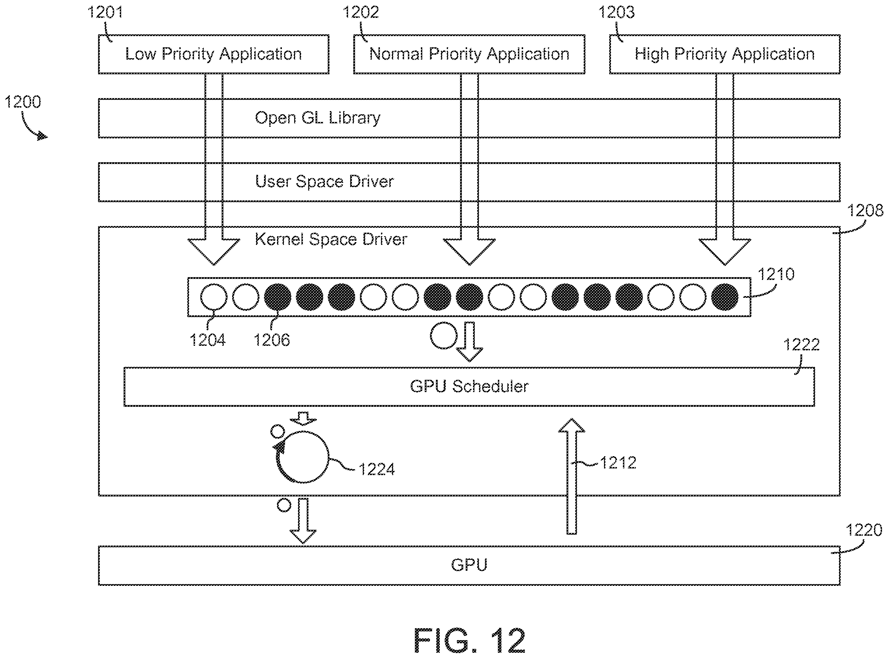

GPU components 918-942 may further include a GPU scheduler 932. GPU scheduler 932 may be configured to manage a schedule for the GPU (e.g., determine which task to process next). GPU scheduler 932 is described in greater detail in FIG. 12. GPU components 918-942 may further include a GPU watchdog configured to monitor GPU performance (e.g., GPU stalls, described in greater detail in FIG. 14). GPU components 918-942 are further shown to include a kernel driver 936 configured to store a queue for holding tasks to be processed, and for selecting a next task to be processed (described in greater detail in FIG. 12). GPU components 918-942 may further include a compositor 938, described above in FIG. 8, a logger 940, and a configuration manager 942. Logger 940 may generally be configured to log GPU activity for use by the rendering core.

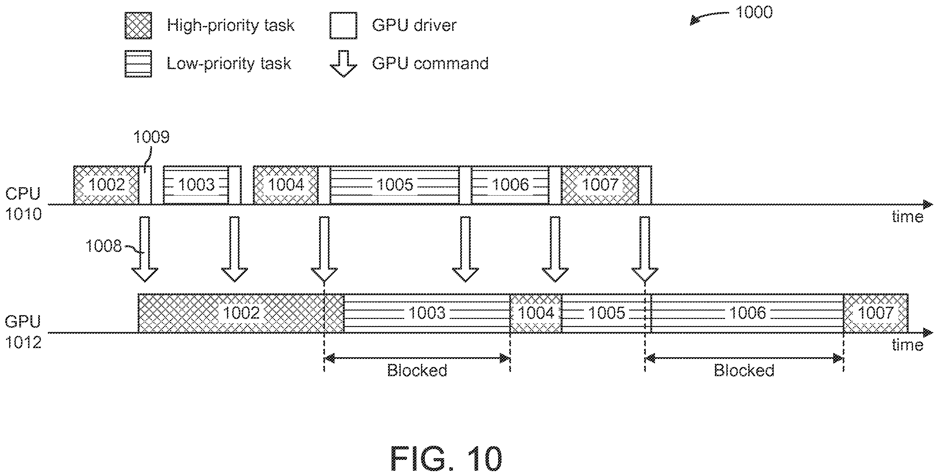

Referring now to FIG. 10, a GPU scheduling process 1000 for rendering graphics on a vehicle display is shown, according to an exemplary embodiment. Process 1000 is shown to include high priority tasks and low priority tasks. These tasks generally represent a display to render on a vehicle display. For example, a high priority task may relate to a navigation display that has to update in real time or near real time, a warning display, a display that displays the current speed of the vehicle, etc. A low priority task may relate to an entertainment-related display (e.g., a radio display, a video playback display, a phone display, a weather display, etc.). A high priority task may generally relate to an application that is considered critical or essential for a driver of the vehicle, and a low priority task may generally relate to an application that provides entertainment features within the vehicle.

In process 1000, the CPU 1010 may have a plurality of high priority tasks 1002, 1004, 1007 and low priority tasks 1003, 1005, 1006 for rendering. CPU 1010 may provide the GPU 1012 with the tasks for rendering as the tasks are generated, via a GPU command (e.g., command 1008) from a GPU driver (e.g., driver 1009). GPU driver 1009 may be an OpenGL driver, in one embodiment. In process 1000, GPU 1012 executes each task in the order in which the task arrives. As a result, a second high priority task 1004 is shown having to wait to be processed while a first low priority task 1003 is processed. The high priority tasks are generally blocked for a period of time from being executed and rendered on the vehicle displays. This may cause a problem as a high priority task may not be rendered in time (e.g., not updating a navigation map in real time, not updating a vehicle warning in time, etc.).

Referring now to FIG. 11, another GPU schedule process 1100 is shown, according to an exemplary embodiment. Process 1100 illustrates a tile-based GPU scheduling process. In process 1100, the GPU may receive the tasks from the CPU and may process each tile of each task for rendering on a display. The GPU may process and render the tiles in parallel via multiple GPU cores (e.g., between the four cores as shown in previous figures).

Process 1100 includes a CPU 1102 having a plurality of generated tasks. For example, CPU 1102 may be executing a low priority task (e.g., a weather display 1110) and a high priority task (e.g., a navigation display 1112). CPU 1102 is shown first generating the low priority task and passing a portion of weather display 1110 to GPU 1104 via a GPU driver. For the sake of simplicity, FIG. 11 only illustrates a portion of displays 1110, 1112 passed to GPU 1104 for rendering. However, it should be understood that process 1100 may be executed for the entirety of the two displays and/or for additional displays. In various embodiments, CPU 1102 and/or GPU 1104 may divide each task into a plurality of tiles such that GPU 1104 may process and render each tile individually.

GPU 1104 begins to process and render each tile of weather display 1100. Meanwhile, CPU 1102 may begin generating the high priority task and when finished, passes a portion of navigation display 1112 to GPU 1104. Navigation display 1112 is passed with a priority level that indicates to GPU 1104 that the display should take priority over weather display 1110. The priority level may relate to how each task is to be displayed on the displays. For example, one task may need to update in real-time while the other task only requires intermittent updates or the content of one task may be more important than the content of another task. The priority level assignment may be made by, for example, an EGL extension such as EGL_IMG_Context_priority.

GPU 1104 is shown receiving the high priority task while processing the fourth tile of the low priority task. GPU 1104 may finish processing the fourth tile of the low priority task, then pause the processing of the low priority task to begin processing of the high priority task. Once the high priority task processing is finished, GPU 1104 may resume processing the low priority task. As shown, GPU 1104 executes a tile based scheduling process, thereby processing tiles individually. GPU 1104 prioritizes tiles from high priority tasks over tiles from low priority tasks as warranted. GPU 1104 may have a built in scheduler to manage the prioritization of each tile for each received task.

Referring now to FIGS. 12-13, another exemplary GPU schedule process 1200 is shown. In process 1200, an event-driven scheduling process synchronizes the GPU with the CPU. When the GPU is in an idle state, tasks with the highest priority may be dispatched to the GPU. When the GPU is actively processing a task, a queue of future tasks may be formed to send to the GPU. When the GPU finishes processing a task, an interrupt may be sent to the queue, which causes a GPU scheduler to retrieve a task from the queue for processing.

As shown in FIG. 12, a plurality of applications 1201-1203 may have one or more tasks to provide to the GPU for processing. Application 1201 is shown as a low priority application; application 1202 is shown as a normal priority application, and application 1203 is shown as a high priority application. The tasks generated by applications 1201-1203 are shown as a combination of high priority tasks 1204 and low priority tasks 1206. While the embodiment of FIG. 12 illustrates just two task priority levels, it should be understood that any number of priority levels may be incorporated with process 1200 (e.g., critical, high, moderate, normal, low, very low, etc.).

In process 1200, a command queue 1210 may be formed in the kernel space driver 1208. Queue 1210 includes tasks to be processed by GPU 1220 in the future. When GPU 1220 finishes processing a task, the GPU may send an interrupt 1212 to GPU scheduler 1222, indicating that GPU 1220 is ready for the next task. GPU scheduler 1222 may access command queue 1210 and determine which task should be provided to GPU 1220. The determination may be made using the priority levels of each task, the location in the queue of each task, or other relevant information. GPU scheduler 1222 provides the selected task to GPU interface 1224 to provide to GPU 1220. GPU interface 1224 may be, for example, a circular or ring buffer.

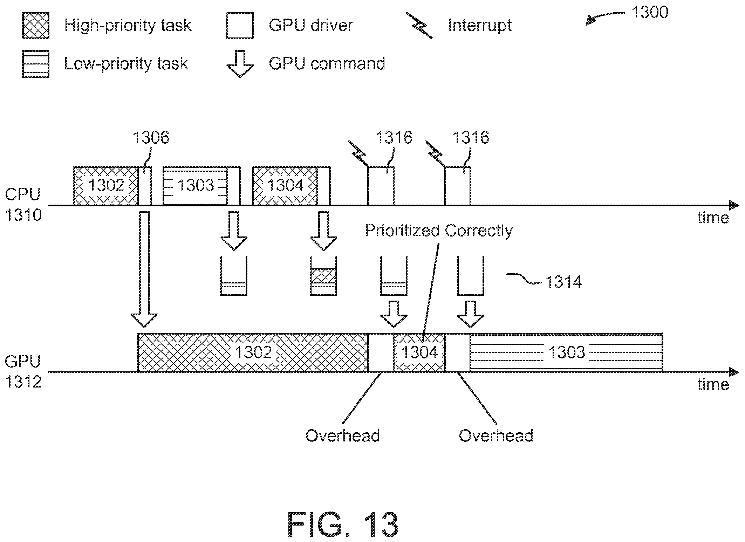

Referring more particularly to FIG. 13, a process 1300 is shown. Process 1300 may be a more detailed version of process 1200. Process 1300 illustrates a pair of high priority tasks 1302, 1303 and a low priority task 1304. CPU 1310 provides the first high priority task 1302 via the GPU driver 1306, and GPU 1312 processes the task. While GPU 1312 is busy processing task 1302, CPU 1310 may continue to generate tasks 1303, 1304 for future processing. Tasks 1303, 1304 are provided to queue 1314 by GPU driver 1306. When GPU 1312 finishes processing task 1302, GPU 1312 sends an interrupt 1316 to CPU 1310. In response to the interrupt, CPU 1310 may provide GPU 1312 with the highest priority task in queue 1314. GPU 1312 may next receive the task with the greatest priority (e.g., task 1304) from queue 1314 and process the task first. GPU 1312 then processes the high priority task (e.g., task 1304), followed by the low priority task (e.g., task 1303). GPU 1312, during processing of the tasks, is shown to have an "overhead" time in which a GPU scheduler (e.g., GPU scheduler 1222) determines which task should be processed next.

GPU scheduler 1222 may incorporate various information in addition to a task priority level to determine which task should be processed next. For example, GPU scheduler 1222 may include reservation features that allow the schedule to reserve an amount of GPU time and resources for each application in the vehicle. As another example, GPU scheduler 1222 may further estimate and log GPU execution time, and distribute tasks to the GPU based on an estimated execution time for the task.

Referring now to FIG. 14, a block diagram of a graphics safety and security system 1400 is shown, according to an exemplary embodiment. The features of system 1400 may provide security features to the process of graphics scheduling as described in FIGS. 11-13. System 1400 includes a GPU 1401, a plurality of applications 1402 to provide tasks to GPU 1401, a GPU driver 1404 (shown as OpenGL in FIG. 14), and a GPU scheduler 1410 as described above. System 1400 is shown to include a robustness extension 1406 (shown as GL_EXT_robustness in FIG. 14). Extension 1406 may be used to check for abnormalities in the processing of each task by the GPU. For example, extension 1406 may check for safe memory copy operations, detect when the GPU has been reset, or otherwise.

System 1400 is further shown to include a runtime API security check 1408. Runtime API security check 1408 may be configured to check a GPU driver 1404 output. For example, check 1408 may validate shaders or modify shaders to work around bugs or quirks, may restrict timings, or otherwise check and modify the task outputted by GPU driver 1404 before the task is sent to GPU 1400. One example implementation of a runtime API security check is the Almost Native Graphics Layer Engine (ANGLE). ANGLE may be configured to translate OpenGL ES 2.0 API calls to DirectX9 or DirectX11 API calls. In other words, ANGLE enables various user interfaces (e.g., the displays of the present disclosure) to run content without having to rely on OpenGL drivers. The use of ANGLE may be advantageous for implementations in which graphics commands for OpenGL drivers may not be compatible with other graphics commands (e.g., WebGL graphics commands, as may be implemented by the displays of the present disclosure). However, it is understood that various other runtime API security checks may be used in other implementations.

System 1400 is further shown to include a GPU watchdog 1412 to monitor GPU execution times. GPU watchdog 1412 may trigger a GPU reset 1414 if the GPU is stuck or blocked. GPU watchdog 1412 may provide GPU scheduler 1410 with GPU execution times and other GPU information for use in scheduling future tasks to be processed.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A vehicle interface system (301) comprising:
a graphics processing unit (913);
a multi-core processing environment (400) including a plurality of processing cores and a physical memory device, the multi-core processing environment (400) configured to execute a plurality of processing domains configured to execute vehicle applications and generate tasks for the graphics processing unit (913), a first processing domain of the plurality of processing domains assigned to at least one first processing core of the plurality of processing cores, the at least one first processing core allocated a first predefined area of the physical memory device during configuration time by a hypervisor (402), a second processing domain of the plurality of processing domains assigned to at least one second processing core of the plurality of processing cores, the at least one second processing core allocated a second predefined area of the physical memory device during configuration time by the hypervisor (402), each processing domain configured to generate the tasks by accessing the corresponding area of the physical memory device;
a rendering core comprising a task scheduler configured to receive the tasks generated by the processing domains and to determine an order in which to send the tasks to the graphics processing unit (913), wherein the graphics processing unit (913) processes the tasks in the order determined by the task scheduler and generates display data based on the tasks; and
an electronic display configured to receive the display data generated by the graphics processing unit (913) and to present the display data to a user, wherein the task scheduler is configured to identify a priority level associated with each of the tasks and determine the order in which to send the tasks to the graphics processing unit (913) based on the identified priority levels, wherein identifying a priority level associated with a task comprises:
identifying which of the plurality of processing domains generated the task;
identifying a priority level associated with the identified processing domain; and
assigning a priority level to the task according to the priority level associated with the identified processing domain;
wherein the plurality of processing domains comprise:
a high reliability domain (408) configured to execute vehicle critical applications and generate high priority tasks for the graphics processing unit (913), the high reliability domain (408) assigned an Engine Control Unit, ECU, input as an assigned peripheral; and
a lower reliability domain configured to execute lower priority vehicle applications and generate low priority tasks for the graphics processing unit (913), wherein the lower reliability domain cannot directly access the ECU input, and if ECU information from the ECU input is used by the lower reliability domain, the ECU information is retrieved by the high reliability domain (408) and placed into a shared memory, the high reliability domain (408) having a higher priority level than the lower reliability domain.

2. The vehicle interface system (301) of Claim 1, wherein the rendering core comprises a first application program interface configured to receive and manage a first set of tasks generated by a first set of the processing domains and to provide the first set of tasks to the scheduler.

3. The vehicle interface system (301) of Claim 2, wherein the task scheduler is configured to:
identify a priority level associated with each of the tasks received at the application program interface;
receive an interrupt from the graphics processing unit (913) requesting a task for processing; and
send a task with a highest identified priority level to the graphics processing unit (913) in response to receiving the interrupt.

4. The vehicle interface system (301) of Claim 2, further comprising a second application program interface configured to receive and manage a second set of tasks generated by a second set of the processing domains, the second set of processing domains comprising one or more of the processing domains not in the first set of processing domains.

5. The vehicle interface system (301) of Claim 1, wherein the rendering core comprises a plurality of remote procedure call endpoints, wherein each of the remote procedure call endpoints is designated for one of the plurality of processing domains and configured to manage the tasks generated by the designated processing domain.

6. The vehicle interface system (301) of Claim 1, wherein the graphics processing unit (913) is configured to identify pieces of each task to be displayed and to store the identified pieces in a framebuffer (923).

7. The vehicle interface system (301) of Claim 1, wherein the rendering core comprises a plurality of framebuffers, wherein each of the framebuffers is designated for one of the plurality of processing domains and configured to store pieces of each task identified by the graphics processing unit (913) as pieces of the task to be displayed.

8. The vehicle interface system (301) of Claim 7, wherein the rendering core comprises a compositor (927) configured to receive the identified pieces of the tasks from the plurality of framebuffers and to generate a display task by assembling the identified pieces.

9. The vehicle interface system (301) of Claim 8, wherein the graphics processing unit receives the assembled task from the task scheduler and generates the display data based on the assembled task.

10. The vehicle interface system (301) of Claim 1, wherein the vehicle interface system (301) comprising:
a multi-core processor comprising:
a first processing core configured to execute high priority vehicle applications and generate high priority tasks for the graphics processing unit, and
a second processing core configured to execute low priority vehicle applications and generate low priority tasks for the graphics processing unit.

11. The vehicle interface system of Claim 10, wherein the high priority tasks are generated by vehicle applications that relate to at least one of a safety of the vehicle and critical vehicle operations.

12. The vehicle interface system of Claim 10, wherein the low priority tasks are generated by at least one of vehicle infotainment applications, cloud applications, and autonomous driver assistance system applications.

13. A method for generating a user interface in a vehicle interface system (301), the method comprising:
allocating, statically by a hypervisor (402) during configuration time, a first predefined area of a physical memory device of a multi-core processing environment (400) to at least one first processing core of the multi-core processing environment and a second predefined area of the physical memory device to at least one second processing core of the multi-core processing environment (400);
assigning a first processing domain of a plurality of processing domains to the at least one first processing core and a second processing domain of the plurality of processing domains to the at least one second processing core;
executing, by the at least one first processing core, high priority vehicle applications in the first processing domain by accessing the first predefined area, the high priority vehicle applications generating high priority tasks;
executing, by the at least one second processing core, low priority vehicle applications in the second processing domain by accessing the second predefined area, the low priority vehicle applications generating low priority tasks;
identifying, by a task scheduler, a priority level associated with each of the generated tasks;
determining, by the task scheduler, an order in which to send the tasks to a graphics processing unit (913) based on the identified priority levels;
processing, by the graphics processing unit (913), the tasks in the order determined by the task scheduler, the graphics processing unit (913) generating display data based on the tasks; and
presenting the display data generated by the graphics processing unit (913) via an electronic display of the vehicle interface system (301), wherein identifying a priority level associated with a task comprises:
identifying which of the plurality of processing domains of the vehicle interface system generated the task;
identifying a priority level associated with the identified processing domain; and assigning a priority level to the task according to the priority level associated with the identified processing domain;
wherein the plurality of processing domains comprise:
a high reliability domain (408) executing vehicle critical applications and generating high priority tasks for the graphics processing unit (913), the high reliability domain (408) assigned an Engine Control Unit, ECU, input as an assigned peripheral; and
a lower reliability domain executing lower priority vehicle applications and generating low priority tasks for the graphics processing unit (913), wherein the lower reliability domain cannot directly access the ECU input, and if ECU information from the ECU input is used by the lower reliability domain, the ECU information is retrieved by the high reliability domain and placed into a shared memory, the high reliability domain (408) having a higher priority level than the lower reliability domain.

14. The method of Claim 13, wherein determining the order in which to send the tasks to the graphics processing unit comprises:
receiving an interrupt from the graphics processing unit requesting a task for processing;
determining which of the generated tasks has a highest identified priority level; and
sending a task with the highest identified priority level to the graphics processing unit in response to receiving the interrupt.

## Patentansprüche

1. Fahrzeugschnittstellensystem (301), das Folgendes umfasst:
eine Grafikverarbeitungseinheit (913);
eine Verarbeitungsumgebung (400) mit mehreren Kernen, die eine Vielzahl von Prozessorkernen und eine physikalische Speichervorrichtung einschließt, wobei die Verarbeitungsumgebung (400) mit mehreren Kernen dazu konfiguriert ist, eine Vielzahl von Verarbeitungsdomänen auszuführen, die dazu konfiguriert sind, Fahrzeuganwendungen auszuführen und Aufgaben für die Grafikverarbeitungseinheit (913) zu erzeugen, wobei eine erste Verarbeitungsdomäne der Vielzahl von Verarbeitungsdomänen mindestens einem ersten Prozessorkern der Vielzahl von Prozessorkernen zugewiesen ist, wobei der mindestens eine erste Prozessorkern während einer Konfigurierungszeit durch einen Hypervisor (402) einem ersten vordefinierten Bereich der physikalischen Speichervorrichtung zugeordnet wird, wobei eine zweite Verarbeitungsdomäne der Vielzahl von Verarbeitungsdomänen mindestens einem zweiten Prozessorkern der Vielzahl von Prozessorkernen zugewiesen ist, wobei der mindestens eine zweite Prozessorkern während einer Konfigurierungszeit durch den Hypervisor (402) einem zweiten vordefinierten Bereich der physikalischen Speichervorrichtung zugeordnet wird, wobei jede Verarbeitungsdomäne dazu konfiguriert ist, die Aufgaben durch ein Zugreifen auf den entsprechenden Bereich der physikalischen Speichervorrichtung zu erzeugen;
einen Renderingkern, der eine Aufgaben-Ablaufsteuerung umfasst, die dazu konfiguriert ist, die Aufgaben, die durch die Verarbeitungsdomänen erzeugt werden, zu empfangen und eine Reihenfolge zu bestimmen, in der die Aufgaben an die Grafikverarbeitungseinheit (913) gesendet werden sollen, wobei die Grafikverarbeitungseinheit (913) die Aufgaben in der Reihenfolgen verarbeitet, die durch die Aufgaben-Ablaufsteuerung bestimmt wird, und Anzeigedaten auf der Basis der Aufgaben erzeugt; und
eine elektronische Anzeige, die dazu konfiguriert ist, die von der Grafikverarbeitungseinheit (913) erzeugten Anzeigedaten zu empfangen und die Anzeigedaten einem Benutzer zu präsentieren, wobei die Aufgaben-Ablaufsteuerung dazu konfiguriert ist, ein Prioritätsniveau zu identifizieren, das mit jeder der Aufgaben assoziiert ist, und auf der Basis der identifizierten Prioritätsniveaus die Reihenfolge zu bestimmen, in der die Aufgaben an die Grafikverarbeitungseinheit (913) gesendet werden sollen, wobei des Identifizieren eines mit einer Aufgabe assoziierten Prioritätsniveaus Folgendes umfasst:
Identifizieren, welche der Vielzahl von Verarbeitungsdomänen die Aufgabe erzeugt hat;
Identifizieren eines Prioritätsniveaus, das mit der identifizierten Verarbeitungsdomäne assoziiert ist; und
Zuweisen eines Prioritätsniveaus an die Aufgabe gemäß dem Prioritätsniveau, das mit der identifizierten Verarbeitungsdomäne assoziiert ist;
wobei die Vielzahl von Verarbeitungsdomänen Folgendes umfassen:
e ine Domäne (408) mit einer hohen Zuverlässigkeit, die dazu konfiguriert ist, fahrzeugkritische Anwendungen auszuführen und Aufgaben mit einer hohen Priorität für die Grafikverarbeitungseinheit (913) zu erzeugen, wobei der Domäne (408) mit der hohen Zuverlässigkeit eine Motorsteuerungseinheits(Engine Control Unit, ECU)-Eingabe als eine zugewiesene Peripherievorrichtung zugewiesen ist; und
e ine Domäne mit einer niedrigeren Zuverlässigkeit, die dazu konfiguriert ist, Fahrzeuganwendungen mit einer niedrigeren Priorität auszuführen und Aufgaben mit einer niedrigen Priorität für die Grafikverarbeitungseinheit (913) zu erzeugen, wobei die Domäne mit der niedrigeren Priorität nicht direkt auf die ECU-Eingabe zugreifen kann, und wobei, falls ECU-Informationen von der ECU-Eingabe von der Domäne mit der niedrigeren Zuverlässigkeit verwendet werden, die ECU-Informationen durch die Domäne ((408) mit der hohen Zuverlässigkeit abgerufen und in einem gemeinsamen Speicher abgelegt werden, wobei die Domäne (408) mit der hohen Zuverlässigkeit ein höheres Prioritätsniveau aufweist als die Domäne mit der niedrigeren Zuverlässigkeit.

2. Fahrzeugschnittstellensystem (301) nach Anspruch 1, wobei der Renderingkern eine erste Anwendungsprogrammschnittstelle umfasst, die dazu konfiguriert ist, einen ersten Satz von Aufgaben, die durch einen ersten Satz von Verarbeitungsdomänen erzeugt wurden, zu empfangen und diesen zu verwalten und den ersten Satz von Aufgaben an die Ablaufsteuerung bereitzustellen.

3. Fahrzeugschnittstellensystem (301) nach Anspruch 2, wobei die Aufgaben-Ablaufsteuerung dazu konfiguriert ist:
ein Prioritätsniveau zu identifizieren, das mit jeder der Aufgaben assoziiert ist, die in der Anwendungsprogrammschnittstelle empfangen werden;
ein Interrupt von der Grafikverarbeitungseinheit (913) zu empfangen, die eine Aufgabe zum Verarbeiten anfordert; und
als Reaktion auf das Empfangen des Interrupts eine Aufgabe mit einem höchsten identifizierten Prioritätsniveau an die Grafikverarbeitungseinheit (913) zu senden.

4. Fahrzeugschnittstellensystem (301) nach Anspruch 2, ferner umfassend eine zweite Anwendungsprogrammschnittstelle, die dazu konfiguriert ist, einen zweiten Satz von Aufgaben, der durch einen zweiten Satz von Verarbeitungsdomänen erzeugt worden ist, zu empfangen und diesen zu verwalten, wobei der zweite Satz von Verarbeitungsdomänen eine oder mehrere der Verarbeitungsdomänen umfasst, die nicht zu dem ersten Satz von Verarbeitungsdomänen gehören.

5. Fahrzeugschnittstellensystem (301) nach Anspruch 1, wobei der Renderingkern eine Vielzahl von entfernten Prozeduraufrufendpunkten umfasst, wobei jeder der entfernten Prozeduraufrufendpunkte einer der Vielzahl von Verarbeitungsdomänen zugeteilt und dazu konfiguriert ist, die Aufgaben, die durch die zugeteilte Verarbeitungsdomäne erzeugt werden, zu verwalten.

6. Fahrzeugschnittstellensystem (301) nach Anspruch 1, wobei die Grafikverarbeitungseinheit (913) dazu konfiguriert ist, Teile von jeder Aufgabe zu identifizieren, die angezeigt werden sollen und die identifizierten Teile in einem Framebuffer (923) zu speichern.

7. Fahrzeugschnittstellensystem (301) nach Anspruch 1, wobei der Renderingkern eine Vielzahl von Framebuffern umfasst, wobei jeder der Framebuffer einer der Vielzahl von Verarbeitungsdomänen zugeteilt und dazu konfiguriert ist, Teile von jeder Aufgabe zu speichern, die durch die Grafikverarbeitungseinheit (913) als Teile der Aufgabe identifiziert worden sind, die angezeigt werden sollen.

8. Fahrzeugschnittstellensystem (301) nach Anspruch 7, wobei der Renderingkern einen Compositor (927) umfasst, der dazu konfiguriert ist, die identifizierten Teile der Aufgaben von der Vielzahl von Framebuffern zu empfangen und durch ein Zusammenfügen der identifizierten Teile eine Anzeigenaufgabe zu erzeugen.

9. Fahrzeugschnittstellensystem (301) nach Anspruch 8, wobei die Grafikverarbeitungseinheit die zusammengefügte Aufgabe von der Aufgaben-Ablaufsteuerung empfängt und die Anzeigedaten auf der Basis der zusammengefügten Aufgabe erzeugt.

10. Fahrzeugschnittstellensystem (301) nach Anspruch 1, wobei das Fahrzeugschnittstellensystem (301) Folgendes umfasst:
einen Prozessor mit mehreren Kernen, der Folgendes umfasst:
einen ersten Prozessorkern, der dazu konfiguriert ist, Fahrzeuganwendungen mit einer hohen Priorität auszuführen und Aufgaben mit einer hohen Priorität für die Grafikverarbeitungseinheit zu erzeugen,
einen zweiten Prozessorkern, der dazu konfiguriert ist, Fahrzeuganwendungen mit einer niedrigen Priorität auszuführen und Aufgaben mit einer niedrigen Priorität für die Grafikverarbeitungseinheit zu erzeugen.

11. Fahrzeugschnittstellensystem nach Anspruch 10, wobei die Aufgaben mit der hohen Priorität durch Fahrzeuganwendungen erzeugt werden, die mindestens eines von einer Sicherheit des Fahrzeugs und kritischen Fahrzeugoperationen betreffen.

12. Fahrzeugschnittstellensystem nach Anspruch 10, wobei die Aufgaben mit der niedrigen Priorität durch mindestens eines von Fahrzeug-Infotainment-Anwendungen, Cloud-Anwendungen und Anwendungen eines autonomen Fahrerassistenzsystems erzeugt werden.

13. Verfahren zum Erzeugen einer Benutzerschnittstelle in einem Fahrzeugschnittstellensystem (301), wobei das Verfahren Folgendes umfasst:
statisches Zuordnen durch einen Hypervisor (402) während einer Konfigurierungszeit eines ersten vordefinierten Bereichs einer physikalischen Speichervorrichtung einer Verarbeitungsumgebung (400) mit mehreren Kernen an mindestens einen ersten Prozessorkern der Verarbeitungsumgebung mit mehreren Kernen und eines zweiten vordefinierten Bereichs der physikalischen Speichervorrichtung an mindestens einen zweiten Prozessorkern der Verarbeitungsumgebung (400) mit mehreren Kernen;
Zuweisen einer ersten Verarbeitungsdomäne einer Vielzahl von Verarbeitungsdomänen an den mindestens einen ersten Prozessorkern und einer zweiten Verarbeitungsdomäne der Vielzahl von Verarbeitungsdomänen an den mindestens einen zweiten Prozessorkern;
Ausführen durch den mindestens einen ersten Prozessorkern von Fahrzeuganwendungen mit einer hohen Priorität in der ersten Verarbeitungsdomäne durch ein Zugreifen auf den ersten vordefinierten Bereich, wobei die Fahrzeuganwendungen mit der hohen Priorität Aufgaben mit einer hohen Priorität erzeugen;
Ausführen durch den mindestens einen zweiten Prozessorkern von Fahrzeuganwendungen mit einer niedrigen Priorität in der zweiten Verarbeitungsdomäne durch ein Zugreifen auf den zweiten vordefinierten Bereich, wobei die Fahrzeuganwendungen mit der niedrigen Priorität Aufgaben mit einer niedrigen Priorität erzeugen;
Identifizieren durch eine Aufgaben-Ablaufsteuerung eines Prioritätsniveaus, das mit jeder der erzeugten Aufgaben assoziiert ist;
Bestimmen durch die Aufgaben-Ablaufsteuerung einer Reihenfolge, in der die Aufgaben an eine Grafikverarbeitungseinheit (913) gesendet werden sollen, auf der Basis der identifizierten Prioritätsniveaus;
Verarbeiten durch die Grafikverarbeitungseinheit (913) der Aufgaben in der durch die Aufgaben-Ablaufsteuerung bestimmten Reihenfolgen, wobei die Grafikverarbeitungseinheit (913) auf der Basis der Aufgaben Anzeigedaten erzeugt; und Präsentieren der durch die Grafikverarbeitungseinheit (913) erzeugten Anzeigedaten über eine elektronische Anzeige des Fahrzeugschnittstellensystems (301), wobei das Identifizieren eines Prioritätsniveaus, das mit einer Aufgabe assoziiert ist, Folgendes umfasst:
Identifizieren, welche der Vielzahl von Verarbeitungsdomänen des Fahrzeugschnittstellensystems die Aufgabe erzeugt hat;
Identifizieren eines Prioritätsniveaus, das mit der identifizierten Verarbeitungsdomäne assoziiert ist; und Zuweisen eines Prioritätsniveaus an die Aufgabe gemäß dem Prioritätsniveau, das mit der identifizierten Verarbeitungsdomäne assoziiert ist;
wobei die Vielzahl von Verarbeitungsdomänen Folgendes umfassen:
eine Domäne (408) mit einer hohen Zuverlässigkeit, die fahrzeugkritische Anwendungen ausführt und Aufgaben mit einer hohen Priorität für die Grafikverarbeitungseinheit (913) erzeugt, wobei der Domäne (408) mit der hohen Zuverlässigkeit eine Motorsteuerungseinheits(ECU)-Eingabe als eine zugewiesene Peripherievorrichtung zugewiesen ist; und
eine Domäne mit einer niedrigeren Zuverlässigkeit, die Fahrzeuganwendungen mit einer niedrigen Priorität ausführt und Aufgaben mit einer niedrigen Priorität für die Grafikverarbeitungseinheit (913) erzeugt, wobei die Domäne mit der niedrigeren Zuverlässigkeit nicht direkt auf die ECU-Eingabe zugreifen kann, und wobei, falls ECU-Informationen von der ECU-Eingabe von der Domäne mit der niedrigeren Zuverlässigkeit verwendet werden, die ECU-Informationen durch die Domäne mit der hohen Zuverlässigkeit abgerufen und in einem gemeinsamen Speicher abgelegt werden, wobei die Domäne (408) mit der hohen Zuverlässigkeit ein höheres Prioritätsniveau ausweist als die Domäne mit der niedrigeren Zuverlässigkeit.

14. Verfahren nach Anspruch 13, wobei das Bestimmen der Reihenfolge, in der die Aufgaben an die Grafikverarbeitungseinheit gesendet werden sollen, Folgendes umfasst:
Empfangen eines Interrupts von der Grafikverarbeitungseinheit, die eine Aufgabe zum Verarbeiten anfordert;
Bestimmen, welche der erzeugten Aufgaben ein höchstes identifiziertes Prioritätsniveau aufweist; und
Senden der Aufgabe mit dem höchsten identifizierten Prioritätsniveau an die Grafikverarbeitungseinheit als Reaktion auf das Empfangen des Interrupts.

## Revendications

1. Système d'interface de véhicule (301) comprenant :
une unité de traitement graphique (913) ;
un environnement de traitement multicoeur (400) comportant une pluralité de coeurs de traitement et un dispositif de mémoire physique, l'environnement de traitement multicoeur (400) étant configuré pour exécuter une pluralité de domaines de traitement configurés pour exécuter des applications de véhicule et générer des tâches pour l'unité de traitement graphique (913), un premier domaine de traitement de la pluralité de domaines de traitement étant affecté à au moins un premier coeur de traitement de la pluralité de coeurs de traitement, l'au moins un premier coeur de traitement étant affecté à une première zone prédéfinie du dispositif de mémoire physique pendant un temps de configuration par un hyperviseur (402), un second domaine de traitement de la pluralité de domaines de traitement étant affecté à au moins un second coeur de traitement de la pluralité de coeurs de traitement, l'au moins un second coeur de traitement étant affecté à une seconde zone prédéfinie du dispositif de mémoire physique pendant un temps de configuration par l'hyperviseur (402), chaque domaine de traitement étant configuré pour générer les tâches en accédant à la zone correspondante du dispositif de mémoire physique ;
un coeur de rendu comprenant un planificateur de tâches configuré pour recevoir les tâches générées par les domaines de traitement et pour déterminer un ordre dans lequel envoyer les tâches à l'unité de traitement graphique (913), dans lequel l'unité de traitement graphique (913) traité les tâches dans l'ordre déterminé par le planificateur de tâches et génère des données d'affichage sur la base des tâches ; et
un affichage électronique configuré pour recevoir les données d'affichage générées par l'unité de traitement graphique (913) et pour présenter les données d'affichage à un utilisateur, dans lequel le planificateur de tâches est configuré pour identifier un niveau de priorité associé à chacune des tâches et déterminer l'ordre dans lequel envoyer les tâches à l'unité de traitement graphique (913) sur la base des niveaux de priorité identifiés, dans lequel l'identification d'un niveau de priorité associé à une tâche comprend :
l'identification de celui de la pluralité de domaines de traitement qui a généré la tâche ;
l'identification d'un niveau de priorité associé au domaine de traitement identifié ; et
l'affectation d'un niveau de priorité à la tâche selon le niveau de priorité associé au domaine de traitement identifié ;
dans lequel la pluralité de domaines de traitement comprend :
un domaine de haute fiabilité (408) configuré pour exécuter des applications critiques de véhicule et générer des tâches de haute priorité pour l'unité de traitement graphique (913), le domaine de haute fiabilité (408) se voyant affecter une entrée d'unité de commande moteur ECU en tant que périphérique affecté ; et
un domaine de plus basse fiabilité configuré pour exécuter des applications de véhicule de plus basse priorité et générer des tâches de basse priorité pour l'unité de traitement graphique (913), dans lequel le domaine de plus basse fiabilité ne peut pas accéder directement à l'entrée de l'ECU, et si les informations de l'ECU provenant de l'entrée de l'ECU sont utilisées par le domaine de plus basse fiabilité, les informations de l'ECU sont récupérées par le domaine de haute fiabilité (408) et placées dans une mémoire partagée, le domaine de haute fiabilité (408) ayant un niveau de priorité plus haut que le domaine de plus basse fiabilité.

2. Système d'interface de véhicule (301) selon la revendication 1, dans lequel le coeur de rendu comprend une première interface de programme d'application configurée pour recevoir et gérer un premier ensemble de tâches générées par un premier ensemble des domaines de traitement et pour fournir le premier ensemble de tâches au planificateur.

3. Système d'interface de véhicule (301) selon la revendication 2, dans lequel le planificateur de tâches est configuré pour :
identifier un niveau de priorité associé à chacune des tâches reçues au niveau de l'interface de programme d'application ;
recevoir une interruption de l'unité de traitement graphique (913) demandant une tâche pour traitement ; et
envoyer une tâche ayant un niveau de priorité identifié le plus haut à l'unité de traitement graphique (913) en réponse à la réception de l'interruption.

4. Système d'interface de véhicule (301) selon la revendication 2, comprenant en outre une seconde interface de programme d'application configurée pour recevoir et gérer un second ensemble de tâches générées par un second ensemble des domaines de traitement, le second ensemble de domaines de traitement comprenant un ou plusieurs des domaines de traitement ne se trouvant pas dans le premier ensemble de domaines de traitement.

5. Système d'interface de véhicule (301) selon la revendication 1, dans lequel le coeur de rendu comprend une pluralité de points terminaux d'appel de procédure distants, dans lequel chacun des points terminaux d'appel de procédure à distance est désigné pour un de la pluralité de domaines de traitement et configuré pour gérer les tâches générées par le domaine de traitement désigné.

6. Système d'interface de véhicule (301) selon la revendication 1, dans lequel l'unité de traitement graphique (913) est configurée pour identifier des éléments de chaque tâche devant être affichés et pour stocker les éléments identifiés dans un tampon de trame (923).

7. Système d'interface de véhicule (301) selon la revendication 1, dans lequel le coeur de rendu comprend une pluralité de tampons de trame, dans lequel chacun des tampons de trame est désigné pour un de la pluralité de domaines de traitement et configuré pour stocker des éléments de chaque tâche identifiés par l'unité de traitement graphique (913) comme des éléments de la tâche devant être affichés.

8. Système d'interface graphique (301) selon la revendication 7, dans lequel le coeur de rendu comprend un compositeur (927) configuré pour recevoir les éléments identifiés des tâches de la pluralité de tampons de trame et pour générer une tâche d'affichage en assemblant les éléments identifiés.

9. Système d'interface de véhicule (301) selon la revendication 8, dans lequel l'unité de traitement graphique reçoit la tâche assemblée du planificateur de tâches et génère les données d'affichage sur la base de la tâche assemblée.

10. Système d'interface de véhicule (301) selon la revendication 1, dans lequel le système d'interface de véhicule (301) comprend :
un processeur multicoeur comprenant :
un premier coeur de traitement configuré pour exécuter des applications de véhicule de haute priorité et générer des tâches de haute priorité pour l'unité de traitement graphique, et
un second coeur de traitement configuré pour exécuter des applications de véhicule de basse priorité et générer des tâches de basse priorité pour l'unité de traitement graphique.

11. Système d'interface de véhicule selon la revendication 10, dans lequel les tâches de haute priorité sont générées par des applications de véhicule qui sont relatives à au moins une d'une sécurité du véhicule et d'opérations de véhicule critiques.

12. Système d'interface de véhicule selon la revendication 10, dans lequel les tâches de basse priorité sont générées par au moins une d'applications d'informations-divertissements de véhicule, d'applications nuagiques et d'applications de système d'assistance à la conduite autonome.

13. Procédé pour générer une interface utilisateur dans un système d'interface de véhicule (301), le procédé comprenant :
l'affectation, statiquement par un hyperviseur (402) pendant un temps de configuration, d'une première zone prédéfinie d'un dispositif de mémoire physique d'un environnement de traitement multicoeur (400) à au moins un premier coeur de traitement de l'environnement de traitement multicoeur et d'une seconde zone prédéfinie du dispositif de mémoire physique à au moins un second coeur de traitement de l'environnement de traitement multicoeur (400) ;
l'affectation d'un premier domaine de traitement d'une pluralité de domaines de traitement à l'au moins un premier coeur de traitement et d'un second domaine de traitement de la pluralité de domaines de traitement à l'au moins un second coeur de traitement ;
l'exécution, par l'au moins un premier coeur de traitement, d'applications de véhicule de haute priorité dans le premier domaine de traitement en accédant à la première zone prédéfinie, les applications de véhicule de haute priorité générant des tâches de haute priorité ;
l'exécution, par l'au moins un second coeur de traitement, d'applications de véhicule de basse priorité dans le second domaine de traitement en accédant à la seconde zone prédéfinie, les applications de véhicule de basse priorité générant des tâches de basse priorité ;
l'identification, par un planificateur de tâches, d'un niveau de priorité associé à chacune des tâches générées ;
la détermination, par le planificateur de tâches, d'un ordre dans lequel envoyer les tâches à une unité de traitement graphiques (913) sur la base des niveaux de priorité identifiés ;
le traitement, par l'unité de traitement graphique (913) des tâches dans l'ordre déterminé par le planificateur de tâches, l'unité de traitement graphique (913) générant des données d'affichage sur la base des tâches ; et
la présentation des données d'affichage générées par l'unité de traitement graphique (913) via un affichage électronique du système d'interface de véhicule (301), dans lequel l'identification d'un niveau de priorité associé à une tâche comprend :
l'identification de celui de la pluralité de domaines de traitement du système d'interface de véhicule qui a généré la tâche ;
l'identification d'un niveau de priorité associé au domaine de traitement identifié ; et
l'affectation d'un niveau de priorité à la tâche selon le niveau de priorité associé au domaine de traitement identifié ;
dans lequel la pluralité de domaines de traitement comprend :
un domaine de haute fiabilité (408) exécutant des applications de véhicule critiques et générant des tâches de haute priorité pour l'unité de traitement graphique (913), le domaine de haute fiabilité (408) se voyant affecter une entrée d'unité de commande de moteur, ECU, en tant que périphérique affecté ; et
un domaine de plus basse fiabilité exécutant des applications de véhicule de plus basse priorité et générant des tâches de basse priorité pour l'unité de traitement graphique (913), dans lequel le domaine de plus basse fiabilité ne peut pas accéder directement à l'entrée de l'ECU, et si les informations de l'ECU provenant de l'entrée de l'ECU sont utilisées par le domaine de plus basse fiabilité, les informations de l'ECU sont récupérées par le domaine de haute fiabilité et placées dans une mémoire partagée, le domaine de haute fiabilité (408) ayant un niveau de priorité plus haut que le domaine de plus basse fiabilité.

14. Procédé selon la revendication 13, dans lequel la détermination de l'ordre dans lequel envoyer les tâches à l'unité de traitement graphique comprend :
la réception d'une interruption de l'unité de traitement graphique demandant une tâche pour traitement ;
la détermination de celle des tâches générées qui a le niveau de priorité identifié le plus haut ; et
l'envoi d'une tâche ayant le niveau de priorité identifié le plus haut à l'unité de traitement graphique en réponse à la réception de l'interruption.
